# EUROPEAN PATENT SPECIFICATION

(11) **EP 4 051 413 B1**
(45) Date of publication and mention of the grant of the patent: **23.09.2026**
(21) Application number: 20828594.0
(22) Date of filing: 28.10.2020
(51) Int. Cl.: B01D 53/56, B01D 39/00, B01D 53/86, B01D 53/90, B01J 23/00, B01J 38/00

(54) **IMPROVING CATALYTIC EFFICIENCY OF FLUE GAS FILTRATION**
VERBESSERN DER KATALYTISCHEN WIRKSAMKEIT VON RAUCHGASFILTRATION
AMÉLIORATION DE L'EFFICACITÉ CATALYTIQUE D'UNE FILTRATION DE GAZ DE FUMÉE

(30) Priority: 30.10.2019 US 201962928128 P; 24.02.2020 US 202062980692 P; 05.06.2020 US 202016894338
(43) Date of publication of application: 07.09.2022
(73) Proprietor: W. L. Gore & Associates, Inc., Newark, DE 19711 (US)
(72) Inventor: SONG, Zhuonan, Newark, DE 19711 (US); STARK, Stephen, Newark, DE 19711 (US)
(74) Representative: HGF
(86) International application number: PCT/US2020/057757
(87) International publication number: WO 2021/086979

(56) References cited:
- EP-A1- 1 236 498
- EP-A1- 2 044 997
- CN-A- 107 376 930
- US-B1- 6 331 351
- XIANGMIN WANG ET AL: "Simultaneous Fast Decomposition of NH4HSO4 and Efficient NOx Removal by NO2 Addition: An Option for NOx Removal in H2O/SO2-Contained Flue Gas at a Low Temperature", ENERGY & FUELS, vol. 32, no. 6, 24 May 2018 (2018-05-24), WASHINGTON, DC, US., pages 6990 - 6994, XP055684393, ISSN: 0887-0624, DOI: 10.1021/acs.energyfuels.8b01455
- XIANGMIN WANG ET AL: "Promotion of NH4HSO4 decomposition in NO/NO2 contained atmosphere at low temperature over V2O5-WO3/TiO2 catalyst for NO reduction", APPLIED CATALYSIS A: GENERAL, vol. 559, 22 April 2018 (2018-04-22), AMSTERDAM, NL, pages 112 - 121, XP055684426, ISSN: 0926-860X, DOI: 10.1016/j.apcata.2018.04.025

## Description

### FIELD

The present disclosure relates to a filter medium, methods of regenerating at least one filter medium, and methods of cleaning a flue gas stream.

### BACKGROUND

Coal-fired power generation plants, municipal waste incinerators, and oil refinery plants generate large amounts of flue gases that contain substantial varieties and quantities of environmental pollutants, nitrogen oxides (NOₓ compounds), mercury (Hg) vapor, and particulate matters (PM). In the United States, burning coal alone generates about 27 million tons of SO₂ and 45 tons of Hg each year. Thus, there is a need for improvements to methods for removing NOₓ compounds, sulfur oxides, mercury vapor, and fine particulate matters from industrial flue gases, such as coal-fired power plant flue gas. Xiangmin Wang et al; Energy & Fuels, vol. 32, no. 6, pages 6990-6994, 24 May 2018 describes simultaneous fast decomposition of NH₄HSO₄ and efficient NOₓ removal by NO₂ addition. Xiangmin Wang et al; Applied Catalysis A: General, vol. 559, pages 112-121, 22 April 2018 describes promotion of NH₄HSO₄ decomposition in NO/NO₂ contained atmosphere at low temperature over V₂O₅-WO₃/TiO₂ catalyst for NO reduction. European Patent Application EP2044997 to Babcock-Hitachi Kabushiki Kaisha describes an apparatus for removing trace amounts of toxic substances rom exhaust gas which is stable over a prolonged period of time. Chinese patent application CN 107376930 to the University of Chongqing describes a sulfur poisoning selective catalytic reduction (SCR) denitration catalyst in situ regeneration method. International Patent application WO2019/099025 to W. L. Gore & Associates, Inc. describes a catalytic composite including a catalytic layered assembly that includes a porous catalytic fluoropolymer film having a first, upstream side and a second, downstream side and one or more felt batts. US patent US 6,331,351 to Gore Enterprise Holdings, Inc., describes an improved active filter material for use in removing target species found in a fluid stream.

### SUMMARY

The claimed invention is defined by the appended claims. The present invention is a method comprising:
providing at least one filter medium;
   wherein the at least one filter medium comprises:
   at least one catalyst material; and
   ammonium bisulfate (ABS) deposits, ammonium sulfate (AS) deposits, or any combination thereof, the at least one filter medium being disposed within at least one filter bag;
      wherein the at least one filter bad is housed within at least one filter bag housing, and wherein the at least one catalyst material is in the form of catalyst particles, wherein the at least one filter medium comprises: a porous protective layer; and a porous catalytic layer, wherein the porous catalytic layer comprises catalytic particles;
      wherein the porous catalytic layer is in the form of a layered assembly comprising: a porous catalytic film; and at least one felt batt, wherein that at least one felt batt is positioned on at least one side of the porous catalytic film;
flowing a flue gas stream transverse to a cross-section of the at least one filter medium, such that the flue gas stream passes through the cross section of the at least one filter medium,
wherein the flue gas stream comprises:
   NOₓ compounds comprising:
   Nitric Oxide (NO), and
   Nitrogen Dioxide (NO₂); and
increasing NOₓ removal efficiency of the at least one filter medium;
wherein the increasing of the NOₓ removal efficiency of the at least one filter medium comprises increasing an upstream NO₂ concentration to a range from 2% to 99% of a total concentration of the upstream NOₓ compounds, wherein increasing the upstream NO₂ concentration to a range from 2% to 99% of a total concentration of the upstream NOₓ compounds comprises introducing at least one oxidizing agent into the flue gas stream; and
wherein the method regenerates the at least one filter medium.

Some aspects of the present disclosure not falling within the scope of the claimed invention relate to a method comprising:
providing at least one filter medium
   wherein the at least one filter medium comprises at least one catalyst material;
flowing a flue gas stream transverse to a cross-section of the at least one filter medium, such that the flue gas stream passes through the cross section of the at least one filter medium from an upstream side of the filter medium to a downstream side of the filter medium;
   wherein the flue gas stream comprises:
      NOₓ compounds comprising:
         Nitric Oxide (NO), and
         Nitrogen Dioxide (NO₂);
      Sulfur Dioxide (SO₂); and
      Ammonia (NH₃);
         maintaining a constant NOₓ removal efficiency of the at least one filter medium;
   wherein the maintaining a constant NOₓ removal efficiency of the at least one filter medium comprises:
      providing an NO₂ concentration, measured from the upstream side of the filter medium, in a range from 2% to 99% of a total concentration of the NOₓ compounds, wherein providing the NO₂ concentration, measured from the upstream side of the filter medium, in a range from 2% to 99% of a total concentration of the NOₓ compounds comprises introducing additional NO₂ into the flue gas stream; and
      controlling the NO₂ concentration, measured from the downstream side of the filter medium, to a range of from 0.0001% to 0.5% of the concentration of the flue gas stream;
wherein the method cleans the flue gas stream.

Some aspects of the present disclosure not forming part of the claimed invention relate to a system comprising:
at least one filter medium,
   wherein the at least one filter medium comprises:
   an upstream side;
   a downstream side;
   at least one catalyst material; and
   ammonium bisulfate (ABS) deposits, ammonium sulfate (AS) deposits, or any combination thereof;
at least one filter bag,
   wherein the at least one filter medium is disposed within the at least one
   filter bag; and
at least one filter bag housing,
   wherein the at least one filter bag is disposed within the at least one filter bag housing;
   wherein the at least one filter bag housing is configured to receive a flow of a flue gas stream transverse to a cross-section of the at least one filter medium, such that the flue gas stream passes through the cross section of the at least one filter medium from the upstream side of the at least one filter medium to the downstream side of the at least one filter medium,
      wherein the flue gas stream comprises:
      NOₓ compounds comprising:
      Nitric Oxide (NO), and
      Nitrogen Dioxide (NO₂); and
wherein the system is configured to increase a NOₓ removal efficiency of the at least one filter medium when an upstream NO₂ concentration is increased to a range from 2% to 99% of a total concentration of the upstream NOₓ compounds, and wherein the upstream NO₂ concentration is increased to a range from 2% to 99% of a total concentration of the upstream NOₓ compounds by introducing additional NO₂ into the flue gas stream.

Some aspects of the present disclosure not falling within the scope of the claimed invention relate to a method comprising:
providing at least one filter medium
   wherein the at least one filter medium comprises at least one catalyst material;
flowing a flue gas stream transverse to a cross-section of the at least one filter medium, such that the flue gas stream passes through the cross section of the at least one filter medium from an upstream side of the filter medium to a downstream side of the filter medium;
   wherein the flue gas stream comprises:
   NOₓ compounds comprising:
      Nitric Oxide (NO), and
      Nitrogen Dioxide (NO₂);
   Sulfur Dioxide (SO₂); and
   Ammonia (NH₃);
maintaining a NOₓ removal efficiency of the at least one filter medium in an amount of at least 70% of an initial NOₓ efficiency by:
   providing an NO₂ concentration, measured from the upstream side of the filter medium, in a range from 2% to 99% of a total concentration of the NOₓ compounds, wherein providing the NO₂ concentration, measured from the upstream side of the filter medium, in a range from 2% to 99% of a total concentration of the NOₓ compounds comprises introducing additional NO₂ into the flue gas stream; and
   controlling NO₂ concentration, measured from the downstream side of the filter medium, to a range of from 0.0001% to 0.5% of the concentration of the flue gas stream
wherein the method cleans the flue gas stream.

Some aspects of the present disclosure not forming part of the present invention relate to a method comprising:
providing at least one filter medium;
   wherein the at least one filter medium comprises:
   at least one catalyst material; and
   ammonium bisulfate (ABS) deposits, ammonium sulfate (AS) deposits, or any combination thereof;
flowing a flue gas stream transverse to a cross-section of the at least one filter medium, such that the flue gas stream passes through the cross section of the at least one filter medium,
   wherein the flue gas stream comprises:
   NOₓ compounds comprising:
      Nitric Oxide (NO), and
      Nitrogen Dioxide (NO₂); and
         increasing NOₓ removal efficiency of the at least one filter medium;
   wherein the increasing of the NOₓ removal efficiency of the at least one filter medium comprises increasing an upstream NO₂ concentration to a range from 2% to 99% of a total concentration of the upstream NOₓ compounds, wherein increasing the upstream NO₂ concentration to a range from 2% to 99% of a total concentration of the upstream NOₓ compounds comprises introducing at least one oxidizing agent into the flue gas stream;
wherein the method regenerates the at least one filter medium.

Some aspects of the present disclosure not falling within the cope of the claimed invention relate to a method comprising:
providing at least one filter medium
   wherein the at least one filter medium comprises at least one catalyst material;
flowing a flue gas stream transverse to a cross-section of the at least one filter medium, such that the flue gas stream passes through the cross section of the at least one filter medium from an upstream side of the filter medium to a downstream side of the filter medium;
   wherein the flue gas stream comprises:
   NOₓ compounds comprising:
      Nitric Oxide (NO), and
      Nitrogen Dioxide (NO₂);
   Sulfur Dioxide (SO₂); and
   Ammonia (NH₃);
maintaining a constant NOₓ removal efficiency of the at least one filter medium;
   wherein the maintaining a constant NOₓ removal efficiency of the at least one filter medium comprises:
   providing an NO₂ concentration, measured from the upstream side of the filter medium, in a range from 2% to 99% of a total concentration of the NOₓ compounds, wherein providing the NO₂ concentration, measured from the upstream side of the filter medium, in a range from 2% to 99% of a total concentration of the NOₓ compounds comprises introducing at least one oxidizing agent into the flue gas stream; and
   controlling the NO₂ concentration, measured from the downstream side of the filter medium, to a range of from 0.0001% to 0.5% of the concentration of the flue gas stream;
wherein the method cleans the flue gas stream.

Some aspects of the present disclosure not forming part of the claimed invention relate to a system comprising:
at least one filter medium,
   wherein the at least one filter medium comprises:
   an upstream side;
   a downstream side;
   at least one catalyst material; and
   ammonium bisulfate (ABS) deposits, ammonium sulfate (AS) deposits, or any combination thereof;
at least one filter bag,
   wherein the at least one filter medium is disposed within the at least one filter bag; and
at least one filter bag housing,
   wherein the at least one filter bag is disposed within the at least one filter bag housing;
   wherein the at least one filter bag housing is configured to receive a flow of a flue gas stream transverse to a cross-section of the at least one filter medium, such that the flue gas stream passes through the cross section of the at least one filter medium from the upstream side of the at least one filter medium to the downstream side of the at least one filter medium,
      wherein the flue gas stream comprises:
      NOₓ compounds comprising:
      Nitric Oxide (NO), and
      Nitrogen Dioxide (NO₂); and
wherein the system is configured to increase an NOₓ removal efficiency of the at least one filter medium when an upstream NO₂ concentration is increased to a range from 2% to 99% of a total concentration of the upstream NOₓ compounds, and wherein the upstream NO₂ concentration is increased to a range from 2% to 99% of a total concentration of the upstream NOₓ compounds by introducing at least one oxidizing agent into the flue gas stream.

Some aspects of the present disclosure not falling within the scope of the claimed invention relate to a method comprising:
providing at least one filter medium
   wherein the at least one filter medium comprises at least one catalyst material;
flowing a flue gas stream transverse to a cross-section of the at least one filter medium, such that the flue gas stream passes through the cross section of the at least one filter medium from an upstream side of the filter medium to a downstream side of the filter medium;
   wherein the flue gas stream comprises:
   NOₓ compounds comprising:
      Nitric Oxide (NO), and
      Nitrogen Dioxide (NO₂);
   Sulfur Dioxide (SO₂); and
   Ammonia (NH₃);
maintaining a NOₓ removal efficiency of the at least one filter medium in an amount of at least 70% of an initial NOₓ efficiency by:
   providing an NO₂ concentration, measured from the upstream side of the filter medium, in a range from 2% to 99% of a total concentration of the NOₓ compounds, wherein providing the NO₂ concentration, measured from the upstream side of the filter medium, in a range from 2% to 99% of a total concentration of the NOₓ compounds comprises introducing at least one oxidizing agent into the flue gas stream; and
   controlling NO₂ concentration, measured from the downstream side of the filter medium, to a range of from 0.0001% to 0.5% of the concentration of the flue gas stream;
wherein the method cleans the flue gas stream.

### DRAWINGS

Some embodiments of the disclosure are herein described, by way of example only, with reference to the accompanying drawings. With specific reference now to the drawings in detail, it is stressed that the embodiments shown are by way of example and for purposes of illustrative discussion of embodiments of the disclosure. In this regard, the description taken with the drawings makes apparent to those skilled in the art how embodiments of the disclosure may be practiced.
Figures 1A-1D depict embodiments of an exemplary filter medium and according to the present disclosure.
Figure 2 depicts an exemplary NOₓ removal efficiency after in-situ flow-through regeneration by NO and NO₂ gas mixture on an exemplary filter medium.
Figure 3 depicts an exemplary relative NOₓ removal efficiency after in-situ flow-through regeneration by NO and NO₂ gas mixture on an exemplary filter medium.
Figure 4 depicts exemplary NOₓ concentrations, measured from a downstream side of an exemplary filter medium, during the in-situ flow through regeneration by an NO and NO₂ mixture.
Figure 5 depicts an exemplary relative NOx removal efficiency after in-situ flow-through regeneration by NO, NO₂ and NH₃ gas mixture on an exemplary filter medium.
Figure 6 depicts an exemplary NOₓ concentration, measured from a downstream side of an exemplar filter medium, during the in-situ flow through regeneration by a mixture comprising NO, NO₂, and NH₃.
Figure 7 depicts an exemplary NOₓ removal efficiency after in-situ flow-by regeneration on an exemplary filter medium by a mixture comprising NO, NO₂, and NH₃.
Figure 8 depicts an exemplary NOx removal efficiency after in-situ flow-through regeneration on exemplary filter bags by a mixture comprising NO, NO₂, and NH₃.
Figure 9 depicts an example of "long term" NOₓ removal efficiency with SO₂ and excess NO₂ in the downstream.
Figure 10 depicts an example of "long term" NOₓ removal efficiency with SO₂ but without excess NO₂ in the downstream.
Figure 11 depicts an example of downstream NO₂ concentration in an exemplary "long term" NOₓ removal efficiency measurement.
Figure 12 depicts an example of NOx removal efficiency and downstream NO₂ concentration before, during and after in-situ flow-through regeneration by NO, NO₂, and NH₃ mixture with exposure to SO₂.
Figure 13 depicts an example of NOₓ removal efficiency before, during and after in-situ flow-through regeneration (148 hours) by NO, NO₂, and NH₃ mixture with exposure to SO₂.
Figure 14 depicts NOx removal efficiency with intermittent in-situ flow-through regeneration by an exemplary NO, NO₂, and NH₃ mixture with exposure to SO₂.
Figure 15 depicts an exemplary NO and NO₂ concentration change with upon injection of 1 wt% hydrogen peroxide (H₂O₂) into a simulated flue gas stream comprising SO₂ and NO.
Figure 16 depicts an exemplary NO to NO₂ percentage conversion upon injection of 1 wt% H₂O₂ injection into a simulated flue gas stream comprising SO₂ and NO at different temperatures.
Figure 17 depicts an exemplary NO to NO₂ percentage conversion upon injection of 0.3 wt% H₂O₂ injection into a simulated flue gas stream comprising SO₂ and NO at different temperatures.

### DETAILED DESCRIPTION

Among those benefits and improvements that have been disclosed, other objects and advantages of this disclosure will become apparent from the following description taken in conjunction with the accompanying figures. Detailed embodiments of the present disclosure are disclosed herein; however, it is to be understood that the disclosed embodiments are merely illustrative of the disclosure that may be embodied in various forms. In addition, each of the examples given regarding the various embodiments of the disclosure which are intended to be illustrative, and not restrictive.

Throughout the specification and claims, the following terms take the meanings explicitly associated herein, unless the context clearly dictates otherwise. The phrases "in one embodiment," "in an embodiment," and "in some embodiments" as used herein do not necessarily refer to the same embodiment(s), though it may. Furthermore, the phrases "in another embodiment" and "in some other embodiments" as used herein do not necessarily refer to a different embodiment, although it may. All embodiments of the disclosure are intended to be combinable without departing from the scope of the invention as defined in the claims.

As used herein, the term "based on" is not exclusive and allows for being based on additional factors not described, unless the context clearly dictates otherwise. In addition, throughout the specification, the meaning of "a," "an," and "the" include plural references. The meaning of "in" includes "in" and "on."

As used herein, the term "flue gas stream" refers to a gaseous mixture that comprises at least one byproduct of a combustion process (such as, but not limited to, a coal combustion process). In some embodiments, a flue gas stream may include at least one gas in an elevated concentration relative to a concentration resulting from the combustion process. For instance, in one non-limiting example, a flue gas stream may be subjected to a "scrubbing" process during which water vapor may be added to the flue gas. Accordingly, in some such embodiments, the flue gas stream may include water vapor in an elevated concentration relative to the initial water vapor concentration due to combustion. Similarly, in some embodiments, a flue gas stream may include at least one gas in a lesser concentration relative to an initial concentration of the at least one gas output from the combustion process. This may occur, for example, by removing at least a portion at least one gas after combustion. In some embodiments, a flue gas may take the form of a gaseous mixture that is a combination of byproducts of multiple combustion processes.

As used herein, the term "flow through" means that a flue gas stream is flowed transverse to a cross section of the at least one filter medium, such that the flue gas stream passes through a cross section of the at least one filter medium. In some embodiments of a "flow through" configuration, the flue gas stream is flowed perpendicular to a cross-section of the at least one filter medium.

As used herein, the term "flow by" means that the flue gas stream is not flowed transverse to a cross section of the at least one filter medium, such that the flue gas does not pass through the cross section of the at least one filter medium. In some embodiments of a "flow by" configuration, the flue gas stream is flowed parallel to a cross-section of the at least one filter medium.

As used herein "upstream" refers to a location of a flue gas stream before entering a filter medium. In the "flow through" context, "upstream" may refer to the location of a flue gas stream before entering a cross section of a filter medium. In the "flow by" context, "upstream" may refer to the location of a flue gas stream before entering an enclosure (e.g., a housing, a filter bag, or other suitable enclosure described herein) that contains a filter medium.

As used herein "downstream" refers to a location of a flue gas stream after exiting a filter medium. In the "flow through" context, "downstream" may refer to the location of a flue gas stream after exiting a cross section of a filter medium. In the "flow by" context, "downstream" may refer to the location of a flue gas stream after exiting an enclosure (e.g., a housing, a filter bag, or other suitable enclosure described herein) that contains a filter medium.

As used herein, the term "NOₓ compound" refers to any oxide of nitrogen. In some non-limiting embodiments, "NOₓ compound" may specifically refer to gaseous oxides of nitrogen that are known environmental pollutants.

As used herein, the term "catalytic composite article" set forth in the Examples refers to any material that includes a combination of at least one catalyst material and at least one additional material according to any embodiment described herein. The additional material is not limited to any particular type of material and may be, for example, a membrane, a felt batt, a ceramic substrate (including but not limited to a ceramic candle), a honeycomb substrate, a monolith substrate, or any combination thereof. The catalytic composite article may, in some non-limiting examples, be a porous catalytic film.

Some embodiments of the present disclosure relate to a method of regenerating at least one filter medium. As used herein, "regenerating at least one filter medium" means that, after regeneration, the at least one filter medium has a higher removal efficiency of at least one component of the flue gas stream as compared to a removal efficiency of the at least one component of the flue gas stream, prior to regeneration. For example, in some non-limiting embodiments, after regeneration, the at least one filter medium may have a higher removal efficiency of NO, NO₂, or combination thereof, as compared to a removal efficiency of the at least one component of the NO, NO₂, or combination thereof, prior to regeneration.

In some embodiments, the at least one catalyst material comprises at least one of: Vanadium Monoxide (VO), Vanadium Trioxide (V₂O₃), Vanadium Dioxide (VO₂), Vanadium Pentoxide (V₂O₅), Tungsten Trioxide (WO₃), Molybdenum Trioxide (MoO₃), Titanium Dioxide (TiO₂), Silicon Dioxide (SiO₂), Aluminum Trioxide (Al₂O₃), Manganese Oxide (MnO₂), zeolites, or any combination thereof. The at least one catalyst material is in the form of catalyst particles.

In some embodiments, the at least one filter medium comprises an upstream side and a downstream side. The at least one filter medium is disposed within at least one filter bag. In some embodiments, a plurality of filter mediums is disposed within a single filter bag. The at least one filter bag is housed within at least one filter bag housing. In some embodiments, a plurality of filter bags is disposed within a single filter bag housing.

The one filter medium comprises a porous protective layer and a porous catalytic layer. The porous catalytic layer comprises at least one catalyst material. In some embodiments, the at least one catalyst material is disposed on the porous catalytic layer. In some embodiments, the at least one catalyst material is within (e.g., embedded within) the porous catalytic layer.

In some embodiments, the porous protective layer comprises a microporous layer. In some embodiments, the microporous layer comprises an expanded polytetrafluoroethylene (ePTFE) membrane.

In some embodiments, the at least one catalyst material is adhered to the filter medium by at least one adhesive. In some embodiments, the at least one catalyst material is adhered to the porous catalytic layer by at least one adhesive. In some exemplary embodiments, the at least one filter medium is in the form of a filter bag, such that the adherence of the at least one catalyst material to the porous catalytic layer by the at least one adhesive form a coated filter bag. In some embodiments, the at least one catalyst material is in the form of catalyst particles, such that the coated filter bag is coated with the catalyst particles.

In some embodiments, the at least one adhesive is chosen from polytetrafluoroethylene (PTFE), fluorinated ethylene propylene (FEP), high molecular weight polyethylene (HMWPE), high molecular weight polypropylene (HMWPP), perfluoroalkoxy alkane (PFA), polyvinylidene fluoride (PVDF), vinylidene fluoride (THV), chlorofluoroethylene (CFE), or any combination thereof. In some embodiments, the at least one adhesive is selected from the group consisting of polytetrafluoroethylene (PTFE), fluorinated ethylene propylene (FEP), high molecular weight polyethylene (HMWPE), high molecular weight polypropylene (HMWPP), perfluoroalkoxy alkane (PFA), polyvinylidene fluoride (PVDF), vinylidene fluoride (THV), chlorofluoroethylene (CFE), and any combination thereof.

In some embodiments, the porous catalytic layer comprises at least one polymeric substrate. In some embodiments, the at least one polymeric substrate comprises a least one of: polytetrafluorethylene, poly(ethylene-co-tetrafluoroethylene), ultra-high molecular weight polyethylene, polyparaxylylene, polylactic acid, polyimide, polyamide, polyaramid, polyphenylene sulfide, fiberglass, or any combination thereof. In some embodiments, the at least one polymeric substrate is selected from the group consisting of: polytetrafluorethylene, poly(ethylene-co-tetrafluoroethylene), ultra-high molecular weight polyethylene, polyparaxylylene, polylactic acid, polyimide, polyamide, polyaramid, polyphenylene sulfide, fiberglass, and any combination thereof.

In some embodiments, the porous catalytic layer includes at least one ceramic substrate. In some embodiments, the at least one ceramic substrate is in the form of a ceramic candle described herein. In some embodiments, the one ceramic substrate comprises ceramic fibers. In some embodiments, the ceramic fibers comprise alkali metal silicates, alkaline earth metal silicates, aluminosilicates, or any combination thereof.

The porous catalytic layer is in the form of a layered assembly comprising a porous catalytic film and one or more felt batts. The one or more felt batts are positioned on at least one side of the porous catalytic film. In some embodiments, the porous catalytic film comprises the at least one catalyst material. In some embodiments, the at least one catalyst material is disposed on the porous catalytic film. In some embodiments, the at least one catalyst material is within (e.g., embedded within) the porous catalytic film.

In some embodiments, the one or more felt batts comprise at least one of: a polytetrafluoroethylene (PTFE) felt, a PTFE fleece, an expanded polytetrafluoroethylene (ePTFE) felt, an ePTFE fleece, a woven fluoropolymer staple fiber, a nonwoven fluoropolymer staple fiber, or any combination thereof. In some embodiments, the one or more felt batts are selected from the group consisting of: a polytetrafluoroethylene (PTFE) felt, a PTFE fleece, an expanded polytetrafluoroethylene (ePTFE) felt, an ePTFE fleece, a woven fluoropolymer staple fiber, a nonwoven fluoropolymer staple fiber, and any combination thereof.

In some embodiments, the porous catalytic film comprises a membrane. In some embodiments, the porous catalytic film comprises a polymer membrane. In some embodiments, the porous catalytic film comprises a fluoropolymer membrane and may be referred to as a porous catalytic fluoropolymer film. In some embodiments, the porous catalytic film comprises an expanded polytetrafluoroethylene (ePTFE) membrane.

In some embodiments, the porous catalytic film comprises catalyst particles enmeshed within the ePTFE membrane. In some embodiments, the ePTFE membrane has a microstructure that includes nodes, fibrils, or any combination thereof. In some embodiments, the catalyst particles may be enmeshed into the microstructure. In some embodiments, the catalyst particles may be enmeshed into the nodes. In some embodiments, the catalyst particles may be enmeshed into the fibrils. In some embodiments, the catalyst particles may be enmeshed into the nodes and fibrils.

In some embodiments, the at least one filter medium is in the form of a ceramic candle. In some embodiments, the ceramic candle comprises at least one ceramic material. In some embodiments, the least one ceramic material is chosen from: silica-aluminate, calcium-magnesium-silicate, calcium-silicate fibers, or any combination thereof. In some embodiments, catalyst particles form a coating on the at least one ceramic material.

In some embodiments, the at least one filter medium may comprise any material configured to capture at least one of solid particulates, liquid aerosols, or any combination thereof from a flue gas stream. In some embodiments, the at least one filter medium is in the form of at least one of: a filter bag, a honeycomb, a monolith or any combination thereof.

The at least one filter medium comprises ammonium bisulfate (ABS) deposits, ammonium sulfate (AS) deposits, or any combination thereof. In some embodiments, ABS deposits are disposed on the at least one catalyst material of the at least one filter medium. In some embodiments, ABS deposits are disposed within the at least one catalyst material of the at least one filter medium. In some embodiments, at least some of the ABS deposits, AS deposits, or any combination thereof may be removed, so as to increase a removal efficiency (e.g., NOₓ removal efficiency) of the at least one filter medium, as described in further detail herein, infra.

In some embodiments, the ABS deposits are present in a concentration ranging from 0.01% to 99% by mass of the at least one filter medium during the providing step. In some embodiments, the ABS deposits are present in a concentration ranging from 0.1% to 99% by mass of the at least one filter medium during the providing step. In some embodiments, the ABS deposits are present in a concentration ranging from 1% to 99% by mass of the at least one filter medium during the providing step. In some embodiments, the ABS deposits are present in a concentration ranging from 10% to 99% by mass of the at least one filter medium during the providing step. In some embodiments, the ABS deposits are present in a concentration ranging from 25% to 99% by mass of the at least one filter medium during the providing step. In some embodiments, the ABS deposits are present in a concentration ranging from 50% to 99% by mass of the at least one filter medium during the providing step. In some embodiments, the ABS deposits are present in a concentration ranging from 75% to 99% by mass of the at least one filter medium during the providing step. In some embodiments, the ABS deposits are present in a concentration ranging from 95% to 99% by mass of the at least one filter medium during the providing step.

In some embodiments, the ABS deposits are present in a concentration ranging from 0.01% to 95% by mass of the at least one filter medium during the providing step. In some embodiments, the ABS deposits are present in a concentration ranging from 0.01% to 75% by mass of the at least one filter medium during the providing step. In some embodiments, the ABS deposits are present in a concentration ranging from 0.01% to 50% by mass of the at least one filter medium during the providing step. In some embodiments, the ABS deposits are present in a concentration ranging from 0.01% to 25% by mass of the at least one filter medium during the providing step. In some embodiments, the ABS deposits are present in a concentration ranging from 0.01% to 10% by mass of the at least one filter medium during the providing step. In some embodiments, the ABS deposits are present in a concentration ranging from 0.01% to 1% by mass of the at least one filter medium during the providing step. In some embodiments, the ABS deposits are present in a concentration ranging from 0.01% to 0.1% by mass of the at least one filter medium during the providing step.

In some embodiments, the ABS deposits are present in a concentration ranging from 0.1% to 95% by mass of the at least one filter medium during the providing step. In some embodiments, the ABS deposits are present in a concentration ranging from 1% to 75% by mass of the at least one filter medium during the providing step. In some embodiments, the ABS deposits are present in a concentration ranging from 10% to 50% by mass of the at least one filter medium during the providing step.

The method of regenerating at least one filter medium comprises flowing a flue gas stream through the at least one filter medium (i.e., transverse to a cross-section of the at least one filter medium), such that the flue gas stream passes through the cross section of the at least one filter medium. In some embodiments, the flue gas stream is flowed from an upstream side to a downstream side of the at least one filter medium. In some embodiments, the flue gas stream is flowed perpendicular to a cross-section of the at least one filter medium.

In some embodiments not falling within the scope of the claimed invention, the method of regenerating at least one filter medium comprises flowing a flue gas stream by the at least one filter medium (i.e., non-transverse to a cross-section of the at least one filter medium), such that the flue gas stream does not pass through the cross section of the at least one filter medium. In some embodiments, the flue gas stream is flowed parallel to a cross-section of the at least one filter medium.

In some embodiments, the temperature of the flue gas stream ranges from 160 °C to 280 °C during the flowing step. In some embodiments, the temperature of the flue gas stream ranges from 175 °C to 280 °C during the flowing step. In some embodiments, the temperature of the flue gas stream ranges from 200 °C to 280 °C during the flowing step. In some embodiments, the temperature of the flue gas stream ranges from 225 °C to 280 °C during the flowing step. In some embodiments, the temperature of the flue gas stream ranges from 250 °C to 280 °C during the flowing step.

In some embodiments, the temperature of the flue gas stream ranges from 160 °C to 250 °C during the flowing step. In some embodiments, the temperature of the flue gas stream ranges from 160 °C to 225 °C during the flowing step. In some embodiments, the temperature of the flue gas stream ranges from 160 °C to 200 °C during the flowing step. In some embodiments, the temperature of the flue gas stream ranges from 160 °C to 175 °C during the flowing step.

In some embodiments, the temperature of the flue gas stream ranges from 175 °C to 250 °C during the flowing step. In some embodiments, the temperature of the flue gas stream ranges from 200 °C to 225 °C during the flowing step.

In some embodiments, such as embodiments where the at least one filter medium is in the form of or comprises a ceramic substrate (e.g., a ceramic candle), the temperature of the flue gas stream ranges from 170 °C to 450 °C during the flowing step. In some embodiments, such as embodiments where the at least one filter medium is in the form of or comprises a ceramic substrate (e.g., a ceramic candle), the temperature of the flue gas stream ranges from 200 °C to 450 °C during the flowing step. In some embodiments, such as embodiments where the at least one filter medium is in the form of or comprises a ceramic substrate (e.g., a ceramic candle), the temperature of the flue gas stream ranges from 250 °C to 450 °C during the flowing step. In some embodiments, such as embodiments where the at least one filter medium is in the form of or comprises a ceramic substrate (e.g., a ceramic candle), the temperature of the flue gas stream ranges from 300 °C to 450 °C during the flowing step. In some embodiments, such as embodiments where the at least one filter medium is in the form of or comprises a ceramic substrate (e.g., a ceramic candle), the temperature of the flue gas stream ranges from 350 °C to 450 °C during the flowing step. In some embodiments, such as embodiments where the at least one filter medium is in the form of or comprises a ceramic substrate (e.g., a ceramic candle), the temperature of the flue gas stream ranges from 400 °C to 450 °C during the flowing step.

In some embodiments, such as embodiments where the at least one filter medium is in the form of or comprises a ceramic substrate (e.g., a ceramic candle), the temperature of the flue gas stream ranges from 170 °C to 400 °C during the flowing step. In some embodiments, such as embodiments where the at least one filter medium is in the form of or comprises a ceramic substrate (e.g., a ceramic candle), the temperature of the flue gas stream ranges from 170 °C to 350 °C during the flowing step. In some embodiments, such as embodiments where the at least one filter medium is in the form of or comprises a ceramic substrate (e.g., a ceramic candle), the temperature of the flue gas stream ranges from 170 °C to 300 °C during the flowing step. In some embodiments, such as embodiments where the at least one filter medium is in the form of or comprises a ceramic substrate (e.g., a ceramic candle), the temperature of the flue gas stream ranges from 170 °C to 250 °C during the flowing step. In some embodiments, such as embodiments where the at least one filter medium is in the form of or comprises a ceramic substrate (e.g., a ceramic candle), the temperature of the flue gas stream ranges from 170 °C to 200 °C during the flowing step.

In some embodiments, such as embodiments where the at least one filter medium is in the form of a or comprises ceramic substrate (e.g., a ceramic candle), the temperature of the flue gas stream ranges from 200 °C to 400 °C during the flowing step. In some embodiments, such as embodiments where the at least one filter medium is in the form of or comprises a ceramic substrate (e.g., a ceramic candle), the temperature of the flue gas stream ranges from 250 °C to 350 °C during the flowing step.

The flue gas stream comprises NOₓ compounds. In some embodiments, the NOₓ compounds comprise Nitric Oxide (NO) and Nitrogen Dioxide (NO₂). In some embodiments, the flue gas stream further comprises at least one of Oxygen (O₂), Water (H₂O), Nitrogen (N₂), Carbon Monoxide (CO), Sulfur Dioxide (SO₂), Sulfur Trioxide (SO₃), one or more hydrocarbons, or any combination thereof.

The method of regenerating at least one filter medium comprises increasing NOₓ removal efficiency of the at least one filter medium. In some embodiments, this increase in NOₓ removal efficiency may occur as a result of removing ABS deposits, AS deposits, or any combination thereof.

The increasing of the NOₓ removal efficiency of the at least one filter medium comprises increasing NO₂ concentration to a range from 2% to 99% of a total concentration of the NOₓ compounds. In some embodiments, the increasing of the NOₓ removal efficiency of the at least one filter medium comprises increasing NO₂ concentration to a range from 5% to 99% of a total concentration of the NOₓ compounds. In some embodiments, the increasing of the NOₓ removal efficiency of the at least one filter medium comprises increasing NO₂ concentration to a range from 10% to 99% of a total concentration of the NOₓ compounds. In some embodiments, the increasing of the NOₓ removal efficiency of the at least one filter medium comprises increasing NO₂ concentration to a range from 25% to 99% of a total concentration of the NOₓ compounds. In some embodiments, the increasing of the NOₓ removal efficiency of the at least one filter medium comprises increasing NO₂ concentration to a range from 50% to 99% of a total concentration of the NOₓ compounds. In some embodiments, the increasing of the NOₓ removal efficiency of the at least one filter medium comprises increasing NO₂ concentration to a range from 75% to 99% of a total concentration of the NOₓ compounds. In some embodiments, the increasing of the NOₓ removal efficiency of the at least one filter medium comprises increasing NO₂ concentration to a range from 95% to 99% of a total concentration of the NOₓ compounds.

In some embodiments, the increasing of the NOₓ removal efficiency of the at least one filter medium comprises increasing NO₂ concentration to a range from 2% to 95% of a total concentration of the NOₓ compounds. In some embodiments, the increasing of the NOₓ removal efficiency of the at least one filter medium comprises increasing NO₂ concentration to a range from 2% to 75% of a total concentration of the NOₓ compounds. In some embodiments, the increasing of the NOₓ removal efficiency of the at least one filter medium comprises increasing NO₂ concentration to a range from 2% to 50% of a total concentration of the NOₓ compounds. In some embodiments, the increasing of the NOₓ removal efficiency of the at least one filter medium comprises increasing NO₂ concentration to a range from 2% to 25% of a total concentration of the NOₓ compounds. In some embodiments, the increasing of the NOₓ removal efficiency of the at least one filter medium comprises increasing NO₂ concentration to a range from 2% to 10% of a total concentration of the NOₓ compounds. In some embodiments, the increasing of the NOₓ removal efficiency of the at least one filter medium comprises increasing NO₂ concentration to a range from 2% to 5% of a total concentration of the NOₓ compounds.

In some embodiments, the increasing of the NOₓ removal efficiency of the at least one filter medium comprises increasing NO₂ concentration to a range from 5% to 95% of a total concentration of the NOₓ compounds. In some embodiments, the increasing of the NOₓ removal efficiency of the at least one filter medium comprises increasing NO₂ concentration to a range from 10% to 75% of a total concentration of the NOₓ compounds. In some embodiments, the increasing of the NOₓ removal efficiency of the at least one filter medium comprises increasing NO₂ concentration to a range from 25% to 50% of a total concentration of the NOₓ compounds.

The concentration of NO₂ is increased by introducing at least one oxidizing agent to the flue gas stream.

In some embodiments, the concentration of NO₂ is increased by introducing at least one oxidizing agent to the flue gas stream in an amount ranging from 0.001 wt% to 50 wt% based on a total weight of the flue gas stream. In some embodiments, the concentration of NO₂ is increased by introducing at least one oxidizing agent to the flue gas stream in an amount ranging from 0.01 wt% to 50 wt% based on a total weight of the flue gas stream. In some embodiments, the concentration of NO₂ is increased by introducing at least one oxidizing agent to the flue gas stream in an amount ranging from 0.1 wt% to 50 wt% based on a total weight of the flue gas stream. In some embodiments, the concentration of NO₂ is increased by introducing at least one oxidizing agent to the flue gas stream in an amount ranging from 1 wt% to 50 wt% based on a total weight of the flue gas stream. In some embodiments, the concentration of NO₂ is increased by introducing at least one oxidizing agent to the flue gas stream in an amount ranging from 10 wt% to 50 wt% based on a total weight of the flue gas stream. In some embodiments, the concentration of NO₂ is increased by introducing at least one oxidizing agent to the flue gas stream in an amount ranging from 20 wt% to 50 wt% based on a total weight of the flue gas stream. In some embodiments, the concentration of NO₂ is increased by introducing at least one oxidizing agent to the flue gas stream in an amount ranging from 30 wt% to 50 wt% based on a total weight of the flue gas stream. In some embodiments, the concentration of NO₂ is increased by introducing at least one oxidizing agent to the flue gas stream in an amount ranging from 40 wt% to 50 wt% based on a total weight of the flue gas stream.

In some embodiments, the concentration of NO₂ is increased by introducing at least one oxidizing agent to the flue gas stream in an amount ranging from 0.001 wt% to 40 wt% based on a total weight of the flue gas stream. In some embodiments, the concentration of NO₂ is increased by introducing at least one oxidizing agent to the flue gas stream in an amount ranging from 0.001 wt% to 30 wt% based on a total weight of the flue gas stream. In some embodiments, the concentration of NO₂ is increased by introducing at least one oxidizing agent to the flue gas stream in an amount ranging from 0.001 wt% to 20 wt% based on a total weight of the flue gas stream. In some embodiments, the concentration of NO₂ is increased by introducing at least one oxidizing agent to the flue gas stream in an amount ranging from 0.001 wt% to 10 wt% based on a total weight of the flue gas stream. In some embodiments, the concentration of NO₂ is increased by introducing at least one oxidizing agent to the flue gas stream in an amount ranging from 0.001 wt% to 1 wt% based on a total weight of the flue gas stream. In some embodiments, the concentration of NO₂ is increased by introducing at least one oxidizing agent to the flue gas stream in an amount ranging from 0.001 wt% to 0.1 wt% based on a total weight of the flue gas stream. In some embodiments, the concentration of NO₂ is increased by introducing at least one oxidizing agent to the flue gas stream in an amount ranging from 0.001 wt% to 0.01 wt% based on a total weight of the flue gas stream.

In some embodiments, the concentration of NO₂ is increased by introducing at least one oxidizing agent to the flue gas stream in an amount ranging from 0.01 wt% to 40 wt% based on a total weight of the flue gas stream. In some embodiments, the concentration of NO₂ is increased by introducing at least one oxidizing agent to the flue gas stream in an amount ranging from 0.1 wt% to 30 wt% based on a total weight of the flue gas stream. In some embodiments, the concentration of NO₂ is increased by introducing at least one oxidizing agent to the flue gas stream in an amount ranging from 1 wt% to 20 wt% based on a total weight of the flue gas stream.

In some embodiments, the at least one oxidizing agent comprises an organic peroxide, a metal peroxide, a peroxy-acid, or any combination thereof.

Examples of at least one organic peroxide that may be suitable for some embodiments of the present disclosure include, but are not limited to, acetyl acetone peroxide, acetyl benzoyl peroxide, tert-butyl hydroperoxide, di-(1-naphthoyl)peroxide, diacetyl peroxide, ethyl hydroperoxide, methyl ethyl ketone peroxide, methyl isobutyl ketone peroxide, or any combination thereof. Examples of at least one metal peroxide that may be suitable for some embodiments of the present disclosure include but are not limited to barium peroxide (BaO₂), sodium peroxide (Na₂O₂),or any combination thereof.

Examples of at least one peroxy-acid that may be suitable for some embodiments of the present disclosure include, but are not limited to, peroxymonosulfuric acid (H₂SO₅), peroxynitric acid (HNO₄), peroxymonophosphoric acid (H₃PO₅), or any combination thereof.

Further examples of at least one oxidizing agent that may be suitable for some embodiments of the present disclosure include, but are not limited to, sodium percarbonate (Na₂H₃CO₆), sodium perborate (Na₂H₄B₂O₈), potassium persulfate (K₂S₂O₈) potassium permanganate (KMnO₄) sodium hypochlorite (NaClO), calcium hypochlorite (Ca(ClO)), chlorine dioxide (ClO₂) potassium chlorate (KClO₃), sodium chlorate (NaClO₃), magnesium chlorate (Mg(ClO₃)₂) ammonium perchlorate (NH₄ClO₄), perchloric acid (HClO₄), potassium perchlorate (KClO₄), sodium perchlorate (NaClO₄), sodium chlorite (NaClO₂), lithium hypochlorite (LiOCl), calcium hypochlorite Ca(OCl)₂, barium hypochlorite Ba(ClO)₂, sodium hypochlorite (NaClO), sodium bismuthate (NaBiO₃), or any combination thereof.

In some embodiments, the at least one oxidizing agent is chosen from: hydrogen peroxide (H₂O₂), ozone (O₃), hydroxyl radical or any combination thereof. In some embodiments, the at least one oxidizing agent is selected from the group consisting of: H₂O₂, O₃, hydroxyl radical, and any combination thereof.

In some embodiments, the at least one oxidizing agent comprises, consists of, or consists essentially of H₂O₂.

In some embodiments, the H₂O₂ is introduced into the flue gas stream in a sufficient amount so as to oxidize at least some of the NO in the flue gas stream to NO₂. In some embodiments, the sufficient amount of H₂O₂ that is introduced into the flue gas stream is an amount sufficient to oxidize at least 10% of the NO concentration in the flue gas stream to NO₂. In some embodiments, the sufficient amount of H₂O₂ that is introduced into the flue gas stream is an amount sufficient to oxidize at least 20% of the NO concentration in the flue gas stream to NO₂. In some embodiments, the sufficient amount of H₂O₂ that is introduced into the flue gas stream is an amount sufficient to oxidize at least 30% of the NO concentration in the flue gas stream to NO₂. In some embodiments, the sufficient amount of H₂O₂ that is introduced into the flue gas stream is an amount sufficient to oxidize at least 40% of the NO concentration in the flue gas stream to NO₂. In some embodiments, the sufficient amount of H₂O₂ that is introduced into the flue gas stream is an amount sufficient to oxidize at least 50% of the NO concentration in the flue gas stream to NO₂. In some embodiments, the sufficient amount of H₂O₂ that is introduced into the flue gas stream is an amount sufficient to oxidize at least 60% of the NO concentration in the flue gas stream to NO₂. In some embodiments, the sufficient amount of H₂O₂ that is introduced into the flue gas stream is an amount sufficient to oxidize at least 70% of the NO concentration in the flue gas stream to NO₂. In some embodiments, the sufficient amount of H₂O₂ that is introduced into the flue gas stream is an amount sufficient to oxidize at least 80% of the NO concentration in the flue gas stream to NO₂. In some embodiments, the sufficient amount of H₂O₂ that is introduced into the flue gas stream is an amount sufficient to oxidize at least 90% of the NO concentration in the flue gas stream to NO₂. In some embodiments, the sufficient amount of H₂O₂ that is introduced into the flue gas stream is an amount sufficient to oxidize at least 95% of the NO concentration in the flue gas stream to NO₂. In some embodiments, the sufficient amount of H₂O₂ that is introduced into the flue gas stream is an amount sufficient to oxidize at least all of the NO concentration in the flue gas stream to NO₂.

In some embodiments, the sufficient amount of H₂O₂ that is introduced into the flue gas stream is an amount sufficient to oxidize 10% to 90% of the NO concentration in the flue gas stream to NO₂. In some embodiments, the sufficient amount of H₂O₂ that is introduced into the flue gas stream is an amount sufficient to oxidize 20% to 90% of the NO concentration in the flue gas stream to NO₂. In some embodiments, the sufficient amount of H₂O₂ that is introduced into the flue gas stream is an amount sufficient to oxidize 30% to 90% of the NO concentration in the flue gas stream to NO₂. In some embodiments, the sufficient amount of H₂O₂ that is introduced into the flue gas stream is an amount sufficient to oxidize 40% to 90% of the NO concentration in the flue gas stream to NO₂. In some embodiments, the sufficient amount of H₂O₂ that is introduced into the flue gas stream is an amount sufficient to oxidize 50% to 90% of the NO concentration in the flue gas stream to NO₂. In some embodiments, the sufficient amount of H₂O₂ that is introduced into the flue gas stream is an amount sufficient to oxidize 60% to 90% of the NO concentration in the flue gas stream to NO₂. In some embodiments, the sufficient amount of H₂O₂ that is introduced into the flue gas stream is an amount sufficient to oxidize 70% to 90% of the NO concentration in the flue gas stream to NO₂. In some embodiments, the sufficient amount of H₂O₂ that is introduced into the flue gas stream is an amount sufficient to oxidize 80% to 90% of the NO concentration in the flue gas stream to NO₂.

In some embodiments, the sufficient amount of H₂O₂ that is introduced into the flue gas stream is an amount sufficient to oxidize 10% to 80% of the NO concentration in the flue gas stream to NO₂. In some embodiments, the sufficient amount of H₂O₂ that is introduced into the flue gas stream is an amount sufficient to oxidize 20% to 70% of the NO concentration in the flue gas stream to NO₂. In some embodiments, the sufficient amount of H₂O₂ that is introduced into the flue gas stream is an amount sufficient to oxidize 30% to 60% of the NO concentration in the flue gas stream to NO₂. In some embodiments, the sufficient amount of H₂O₂ that is introduced into the flue gas stream is an amount sufficient to oxidize 30% to 50% of the NO concentration in the flue gas stream to NO₂. In some embodiments, the sufficient amount of H₂O₂ that is introduced into the flue gas stream is an amount sufficient to oxidize 40% to 50% of the NO concentration in the flue gas stream to NO₂.

In some embodiments, the sufficient amount of H₂O₂ that is introduced into the flue gas stream is 0.1 wt% H₂O₂ to 30 wt% H₂O₂ based on a total weight of the flue gas stream. In some embodiments, the sufficient amount of H₂O₂ that is introduced into the flue gas stream is 1 wt% H₂O₂ to 30 wt% H₂O₂ based on a total weight of the flue gas stream. In some embodiments, the sufficient amount of H₂O₂ that is introduced into the flue gas stream is 5 wt% H₂O₂ to 30 wt% H₂O₂ based on a total weight of the flue gas stream. In some embodiments, the sufficient amount of H₂O₂ that is introduced into the flue gas stream is 10 wt% H₂O₂ to 30 wt% H₂O₂ based on a total weight of the flue gas stream. In some embodiments, the sufficient amount of H₂O₂ that is introduced into the flue gas stream is 15 wt% H₂O₂ to 30 wt% H₂O₂ based on a total weight of the flue gas stream. In some embodiments, the sufficient amount of H₂O₂ that is introduced into the flue gas stream is 20 wt% H₂O₂ to 30 wt% H₂O₂ based on a total weight of the flue gas stream. In some embodiments, the sufficient amount of H₂O₂ that is introduced into the flue gas stream is 25 wt% H₂O₂ to 30 wt% H₂O₂ based on a total weight of the flue gas stream.

In some embodiments, the sufficient amount of H₂O₂ that is introduced into the flue gas stream is 0.1 wt% H₂O₂ to 25 wt% H₂O₂ based on a total weight of the flue gas stream. In some embodiments, the sufficient amount of H₂O₂ that is introduced into the flue gas stream is 0.1 wt% H₂O₂ to 20 wt% H₂O₂ based on a total weight of the flue gas stream. In some embodiments, the sufficient amount of H₂O₂ that is introduced into the flue gas stream is 0.1 wt% H₂O₂ to 15 wt% H₂O₂ based on a total weight of the flue gas stream. In some embodiments, the sufficient amount of H₂O₂ that is introduced into the flue gas stream is 0.1 wt% H₂O₂ to 10 wt% H₂O₂ based on a total weight of the flue gas stream. In some embodiments, the sufficient amount of H₂O₂ that is introduced into the flue gas stream is 0.1 wt% H₂O₂ to 5 wt% H₂O₂ based on a total weight of the flue gas stream. In some embodiments, the sufficient amount of H₂O₂ that is introduced into the flue gas stream is 0.1 wt% H₂O₂ to 1 wt% H₂O₂ based on a total weight of the flue gas stream.

In some embodiments, the sufficient amount of H₂O₂ that is introduced into the flue gas stream is 1 wt% H₂O₂ to 25 wt% H₂O₂ based on a total weight of the flue gas stream. In some embodiments, the sufficient amount of H₂O₂ that is introduced into the flue gas stream is 5 wt% H₂O₂ to 20 wt% H₂O₂ based on a total weight of the flue gas stream. In some embodiments, the sufficient amount of H₂O₂ that is introduced into the flue gas stream is 10 wt% H₂O₂ to 15 wt% H₂O₂ based on a total weight of the flue gas stream.

In some embodiments, the oxidation of at least some of the NO in the flue gas stream to NO₂ results in the NO₂ having an upstream concentration in a range from 2% to 99% of a total concentration of the NOₓ compounds. In some embodiments, the oxidation of at least some of the NO in the flue gas stream to NO₂ results in the NO₂ having an upstream concentration in a range from 10 % to 99% of a total concentration of the NOₓ compounds. In some embodiments, the oxidation of at least some of the NO in the flue gas stream to NO₂ results in the NO₂ having an upstream concentration in a range from 25% to 99% of a total concentration of the NOₓ compounds. In some embodiments, the oxidation of at least some of the NO in the flue gas stream to NO₂ results in the NO₂ having an upstream concentration in a range from 50% to 99% of a total concentration of the NOₓ compounds. In some embodiments, the oxidation of at least some of the NO in the flue gas stream to NO₂ results in the NO₂ having an upstream concentration in a range from 75% to 99% of a total concentration of the NOₓ compounds. In some embodiments, the oxidation of at least some of the NO in the flue gas stream to NO₂ results in the NO₂ having an upstream concentration in a range from 90% to 99% of a total concentration of the NOₓ compounds.

In some embodiments, the oxidation of at least some of the NO in the flue gas stream to NO₂ results in the NO₂ having an upstream concentration in a range from 2% to 90% of a total concentration of the NOₓ compounds. In some embodiments, the oxidation of at least some of the NO in the flue gas stream to NO₂ results in the NO₂ having an upstream concentration in a range from 2% to 75% of a total concentration of the NOₓ compounds. In some embodiments, the oxidation of at least some of the NO in the flue gas stream to NO₂ results in the NO₂ having an upstream concentration in a range from 2% to 50% of a total concentration of the NOₓ compounds. In some embodiments, the oxidation of at least some of the NO in the flue gas stream to NO₂ results in the NO₂ having an upstream concentration in a range from 2% to 25% of a total concentration of the NOₓ compounds. In some embodiments, the oxidation of at least some of the NO in the flue gas stream to NO₂ results in the NO₂ having an upstream concentration in a range from 2% to 10% of a total concentration of the NOₓ compounds.

In some embodiments, the oxidation of at least some of the NO in the flue gas stream to NO₂ results in the NO₂ having an upstream concentration in a range from 10% to 90% of a total concentration of the NOₓ compounds. In some embodiments, the oxidation of at least some of the NO in the flue gas stream to NO₂ results in the NO₂ having an upstream concentration in a range from 10% to 75% of a total concentration of the NOₓ compounds. In some embodiments, the oxidation of at least some of the NO in the flue gas stream to NO₂ results in the NO₂ having an upstream concentration in a range from 25% to 50% of a total concentration of the NOₓ compounds.

In some embodiments, the concentration of NO₂ is increased by introducing additional NO₂ into the flue gas stream. In some embodiments, at least some of the additional NO₂ is introduced by oxidizing at least some of the NO in the flue gas stream to NO₂ with the at least one oxidizing agent described herein. In some embodiments, the additional NO₂ is introduced directly into the flue gas stream, e.g., by at least one gas injection system. In some embodiments, additional NO₂ may be introduced by a combination of direct introduction and oxidization. In some embodiments, introducing additional NO₂ comprises removing at least some of the NO in the flue gas stream from the flue gas stream, oxidizing the NO to NO₂, and reintroducing at least some of the resulting NO₂ into the flue gas stream. In some embodiments, the resulting NO₂ may be reintroduced into the flue gas stream as a gas mixture comprising NO and NO₂.

In some embodiments, the increasing of the NOₓ removal efficiency of the at least one filter medium further comprises adding ammonia (NH₃). In some embodiments, cleaning a flue gas stream (as described herein, infra) comprises adding NH₃. In some embodiments, a combination of cleaning the flue gas stream and regenerating the at least one filter medium comprises adding NH₃.

In some embodiments, NH₃ is added in a concentration ranging from 0.0001% to 0.5% of the concentration of the flue gas stream. In some embodiments, NH₃ is added in a concentration ranging from 0.001% to 0.5% of the concentration of the flue gas stream. In some embodiments, NH₃ is added in a concentration ranging from 0.01% to 0.5% of the concentration of the flue gas stream. In some embodiments, NH₃ is added in a concentration ranging from 0.1% to 0.5% of the concentration of the flue gas stream.

In some embodiments, NH₃ is added in a concentration ranging from 0.0001% to 0.1% of the concentration of the flue gas stream. In some embodiments, NH₃ is added in a concentration ranging from 0.0001% to 0.05% of the concentration of the flue gas stream. In some embodiments, NH₃ is added in a concentration ranging from 0.0001% to 0.005% of the concentration of the flue gas stream.

In some embodiments, NH₃ is added in a concentration ranging from 0.005% to 0.1% of the concentration of the flue gas stream. In some embodiments, NH₃ is added in a concentration ranging from 0.005% to 0.05% of the concentration of the flue gas stream.

In some embodiments, the NOₓ removal efficiency of the at least one filter medium is at least 0.5% higher after the increasing step than during the providing step. In some embodiments, the NOₓ removal efficiency of the at least one filter medium is at least 1 % higher after the increasing step than during the providing step. In some embodiments, the NOₓ removal efficiency of the at least one filter medium is at least 5 % higher after the increasing step than during the providing step. In some embodiments, the NOₓ removal efficiency of the at least one filter medium is at least 10 % higher after the increasing step than during the providing step. In some embodiments, the NOₓ removal efficiency of the at least one filter medium is at least 25 % higher after the increasing step than during the providing step. In some embodiments, the NOₓ removal efficiency of the at least one filter medium is at least 50 % higher after the increasing step than during the providing step. In some embodiments, the NOₓ removal efficiency of the at least one filter medium is at least 75 % higher after the increasing step than during the providing step. In some embodiments, the NOₓ removal efficiency of the at least one filter medium is at least 100 % higher after the increasing step than during the providing step.

In some embodiments, the increasing of the NOₓ removal efficiency comprises removing at least some of the ABS deposits, the AS deposits, or any combination thereof, from the at least one filter medium. In some embodiments, removing at least some of the ABS deposits, the AS deposits, or any combination thereof, from the at least one filter medium may regenerate the at least one filter medium, as described herein.

In some embodiments, the increasing of the NOₓ removal efficiency comprises removing at least 10% of the ABS deposits, the AS deposits, or any combination thereof, from the at least one filter medium. In some embodiments, the increasing of the NOₓ removal efficiency comprises removing at least 25% of the ABS deposits, the AS deposits, or any combination thereof, from the at least one filter medium. In some embodiments, the increasing of the NOₓ removal efficiency comprises removing at least 50% of the ABS deposits, the AS deposits, or any combination thereof, from the at least one filter medium. In some embodiments, the increasing of the NOₓ removal efficiency comprises removing at least 75% of the ABS deposits, the AS deposits, or any combination thereof, from the at least one filter medium. In some embodiments, the increasing of the NOₓ removal efficiency comprises removing at least 95% of the ABS deposits, the AS deposits, or any combination thereof, from the at least one filter medium. In some embodiments, the increasing of the NOₓ removal efficiency comprises removing all of the ABS deposits, the AS deposits, or any combination thereof, from the at least one filter medium.

In some embodiments, after the step of increasing the NOₓ removal efficiency, ABS deposits are disposed on the catalyst material of the at least one filter medium in a concentration ranging from 0.01% to 98% by mass of the at least one filter medium. In some embodiments after the step of increasing the NOₓ removal efficiency, ABS deposits are disposed on the catalyst material of the at least one filter medium in a concentration ranging from 0.01% to 90% by mass of the at least one filter medium. In some embodiments, after the step of increasing the NOₓ removal efficiency, ABS deposits are disposed on the catalyst material of the at least one filter medium in a concentration ranging from 0.01% to 50% by mass of the at least one filter medium. In some embodiments, after the step of increasing the NOₓ removal efficiency, ABS deposits are disposed on the catalyst material of the at least one filter medium in a concentration ranging from 0.01% to 20% by mass of the at least one filter medium. In some embodiments, after the step of increasing the NOₓ removal efficiency, ABS deposits are disposed on the catalyst material of the at least one filter medium in a concentration ranging from 0.01% to 10% by mass of the at least one filter medium. In some embodiments, after the step of increasing the NOₓ removal efficiency, ABS deposits are disposed on the catalyst material of the at least one filter medium in a concentration ranging from 0.01% to 5% by mass of the at least one filter medium. In some embodiments, after the step of increasing the NOₓ removal efficiency, ABS deposits are disposed on the catalyst material of the at least one filter medium in a concentration ranging from 0.01% to 1% by mass of the at least one filter medium. In some embodiments, after the step of increasing the NOₓ removal efficiency, ABS deposits are disposed on the catalyst material of the at least one filter medium in a concentration ranging from 0.01% to 0.1% by mass of the at least one filter medium.

In some embodiments, after the step of increasing the NOₓ removal efficiency, ABS deposits are disposed on the catalyst material of the at least one filter medium in a concentration ranging from 0.1% to 98% by mass of the at least one filter medium. In some embodiments, after the step of increasing the NOₓ removal efficiency, ABS deposits are disposed on the catalyst material of the at least one filter medium in a concentration ranging from 1% to 98% by mass of the at least one filter medium. In some embodiments, after the step of increasing the NOₓ removal efficiency, ABS deposits are disposed on the catalyst material of the at least one filter medium in a concentration ranging from 5% to 98% by mass of the at least one filter medium. In some embodiments, after the step of increasing the NOₓ removal efficiency, ABS deposits are disposed on the catalyst material of the at least one filter medium in a concentration ranging from 10% to 98% by mass of the at least one filter medium. In some embodiments, after the step of increasing the NOₓ removal efficiency, ABS deposits are disposed on the catalyst material of the at least one filter medium in a concentration ranging from 20% to 98% by mass of the at least one filter medium. In some embodiments, after the step of increasing the NOₓ removal efficiency, ABS deposits are disposed on the catalyst material of the at least one filter medium in a concentration ranging from 50% to 98% by mass of the at least one filter medium. In some embodiments after the step of increasing the NOₓ removal efficiency, ABS deposits are disposed on the catalyst material of the at least one filter medium in a concentration ranging from 90% to 98% by mass of the at least one filter medium.

In some embodiments, after the increasing step, ABS deposits are disposed on the catalyst material of the at least one filter medium in a concentration ranging from 0.1% to 90% by mass of the at least one filter medium. In some embodiments, after the step of increasing the NOₓ removal efficiency, ABS deposits are disposed on the catalyst material of the at least one filter medium in a concentration ranging from 1% to 50% by mass of the at least one filter medium. In some embodiments, after the step of increasing the NOₓ removal efficiency, ABS deposits are disposed on the catalyst material of the at least one filter medium in a concentration ranging from 5% to 20% by mass of the at least one filter medium.

Some embodiments of the present disclosure not falling within the scope of the claimed invention relate to a method of cleaning a flue gas stream. As used herein, "cleaning a flue gas stream" means that after "cleaning a flue gas stream" at least one component (such as, but not limited to, NO, NO₂, or a combination thereof) of the flue gas stream is present at a lower concentration as compared to a concentration of the at least one component prior to "cleaning the flue gas stream." As described herein, "cleaning a flue gas stream" is not necessarily mutually exclusive with "regenerating at least one filter medium" because, in some embodiments, at least one filter medium, prior to regeneration, may still "clean a flue gas stream," at a lower efficiency as compared to the "at least one filter medium," after regeneration.

The at least one filter medium is regenerated during the cleaning of the flue gas stream. In some embodiments, at least one filter medium may be regenerated before the cleaning of the flue gas stream. In some embodiments, at least one filter medium may be regenerated after the cleaning of the flue gas stream. In some embodiments, a method may comprise switching between configurations of "cleaning a flue gas stream" and "regenerating at least one filter medium." In some embodiments, at least one step, component, or combination thereof from a method of "cleaning a flue gas stream" may be used in a method of "regenerating at least one filter medium" or vice versa.

In some embodiments not falling within the scope of the claimed invention, the method of cleaning the flue gas stream may comprise flowing a flue gas stream through a filter medium as described herein, (i.e., transverse to a cross-section of a filter medium, such that the flue gas stream passes through the cross section of the at least one filter medium).

In some embodiments of the method of cleaning the flue gas stream, the flue gas stream comprises NOₓ compounds. In some embodiments, the NOₓ compounds may comprise Nitric Oxide (NO), and Nitrogen Dioxide (NO₂). In some embodiments, the flue gas stream may further comprise Sulfur Dioxide (SO₂) and Ammonia (NH₃).

In some embodiments, the SO₂, NH₃, and NOₓ compounds are present in an amount of at least 1 mg/m³ based on a total volume of the flue gas stream. In some embodiments, the SO₂, NH₃, and NOₓ compounds are present in an amount of at least 2 mg/m³ based on a total volume of the flue gas stream. In some embodiments, the SO₂, NH₃, and NOₓ compounds are present in an amount of at least 5 mg/m³ based on a total volume of the flue gas stream. In some embodiments, the SO₂, NH₃, and NOₓ compounds are present in an amount of at least 10 mg/m³ based on a total volume of the flue gas stream. In some embodiments, the SO₂, NH₃, and NOₓ compounds are present in an amount of at least 25 mg/m³ based on a total volume of the flue gas stream. In some embodiments, the SO₂, NH₃, and NOₓ compounds are present in an amount of at least 50 mg/m³ based on a total volume of the flue gas stream. In some embodiments, the SO₂, NH₃, and NOₓ compounds are present in an amount of at least 100 mg/m³ based on a total volume of the flue gas stream.

In some embodiments of the method of cleaning the flue gas stream, the method may include maintaining a constant NOₓ removal efficiency of the at least one filter medium. As used herein "a constant NOₓ removal efficiency" means that a NOₓ removal efficiency of the at least one filter medium does not vary by more than a predetermined amount.

In some embodiments of the method of cleaning the flue gas stream, the method may include maintaining NOₓ removal efficiency of the at least one filter medium that does not vary by more than ±0.1%. In some embodiments of the method of cleaning the flue gas stream, the method may include maintaining NOₓ removal efficiency of the at least one filter medium that does not vary by more than ±0.5%. In some embodiments of the method of cleaning the flue gas stream, the method may include maintaining NOₓ removal efficiency of the at least one filter medium that does not vary by more than ±1%. In some embodiments of the method of cleaning the flue gas stream, the method may include maintaining NOₓ removal efficiency of the at least one filter medium that does not vary by more than ±2%. In some embodiments of the method of cleaning the flue gas stream, the method may include maintaining NOₓ removal efficiency of the at least one filter medium that does not vary by more than ±3%. In some embodiments of the method of cleaning the flue gas stream, the method may include maintaining NOₓ removal efficiency of the at least one filter medium that does not vary by more than ±4%. In some embodiments of the method of cleaning the flue gas stream, the method may include maintaining NOₓ removal efficiency of the at least one filter medium that does not vary by more than ±5%.

In some embodiments, maintaining a constant NOx removal efficiency of the at least one filter medium comprises providing an NO₂ concentration, measured from the upstream side of the filter medium, in a range from 2% to 99% of a total concentration of the NOₓ compounds. In some embodiments, maintaining a constant NOₓ removal efficiency of the at least one filter medium comprises providing an NO₂ concentration, measured from the upstream side of the filter medium, in a range from 5% to 99% of a total concentration of the NOₓ compounds. In some embodiments, maintaining a constant NOx removal efficiency of the at least one filter medium comprises providing an NO₂ concentration, measured from the upstream side of the filter medium, in a range from 10% to 99% of a total concentration of the NOₓ compounds. In some embodiments, maintaining a constant NOₓ removal efficiency of the at least one filter medium comprises providing an NO₂ concentration, measured from the upstream side of the filter medium, in a range from 25% to 99% of a total concentration of the NOₓ compounds. In some embodiments, maintaining a constant NOx removal efficiency of the at least one filter medium comprises providing an NO₂ concentration, measured from the upstream side of the filter medium, in a range from 50% to 99% of a total concentration of the NOₓ compounds. In some embodiments, maintaining a constant NOx removal efficiency of the at least one filter medium comprises providing an NO₂ concentration, measured from the upstream side of the filter medium, in a range from 75% to 99% of a total concentration of the NOₓ compounds. In some embodiments, maintaining a constant NOx removal efficiency of the at least one filter medium comprises providing an NO₂ concentration, measured from the upstream side of the filter medium, in a range from 95% to 99% of a total concentration of the NOₓ compounds.

In some embodiments, maintaining a constant NOx removal efficiency of the at least one filter medium comprises providing an NO₂ concentration, measured from the upstream side of the filter medium, in a range from 2% to 95% of a total concentration of the NOₓ compounds. In some embodiments, maintaining a constant NOₓ removal efficiency of the at least one filter medium comprises providing an NO₂ concentration, measured from the upstream side of the filter medium, in a range from 2% to 75% of a total concentration of the NOₓ compounds. In some embodiments, maintaining a constant NOx removal efficiency of the at least one filter medium comprises providing an NO₂ concentration, measured from the upstream side of the filter medium, in a range from 2% to 50% of a total concentration of the NOₓ compounds. In some embodiments, maintaining a constant NOₓ removal efficiency of the at least one filter medium comprises providing an NO₂ concentration, measured from the upstream side of the filter medium, in a range from 2% to 25% of a total concentration of the NOₓ compounds. In some embodiments, maintaining a constant NOₓ removal efficiency of the at least one filter medium comprises providing an NO₂ concentration, measured from the upstream side of the filter medium, in a range from 2% to 10% of a total concentration of the NOₓ compounds. In some embodiments, maintaining a constant NOx removal efficiency of the at least one filter medium comprises providing an NO₂ concentration, measured from the upstream side of the filter medium, in a range from 2% to 5% of a total concentration of the NOₓ compounds.

In some embodiments, maintaining a constant NOx removal efficiency of the at least one filter medium comprises providing an NO₂ concentration, measured from the upstream side of the filter medium, in a range from 5% to 95% of a total concentration of the NOₓ compounds. In some embodiments, maintaining a constant NOx removal efficiency of the at least one filter medium comprises providing an NO₂ concentration, measured from the upstream side of the filter medium in a range from 10% to 75% of a total concentration of the NOₓ compounds. In some embodiments, maintaining a constant NOₓ removal efficiency of the at least one filter medium comprises providing an NO₂ concentration, measured from the upstream side of the filter medium, in a range from 25% to 50% of a total concentration of the NOₓ compounds.

In some embodiments, maintaining a constant NOₓ removal efficiency of the at least one filter medium may include controlling an NO₂ concentration, measured from the downstream side of the filter medium, to a range of from 0.0001% to 0.5% of the concentration of the flue gas stream. In some embodiments, maintaining a constant NOₓ removal efficiency of the at least one filter medium may include controlling an NO₂ concentration, measured from the downstream side of the filter medium, to a range of from 0.001% to 0.5% of the concentration of the flue gas stream. In some embodiments, maintaining a constant NOₓ removal efficiency of the at least one filter medium may include controlling an NO₂ concentration, measured from the downstream side of the filter medium, to a range of from 0.01% to 0.5% of the concentration of the flue gas stream. In some embodiments, maintaining a constant NOₓ removal efficiency of the at least one filter medium may include controlling an NO₂ concentration, measured from the downstream side of the filter medium, to a range of from 0.1% to 0.5% of the concentration of the flue gas stream.

In some embodiments, maintaining a constant NOₓ removal efficiency of the at least one filter medium may include controlling an NO₂ concentration, measured from the downstream side of the filter medium, to a range of from 0.0001% to 0.1% of the concentration of the flue gas stream. In some embodiments, maintaining a constant NOₓ removal efficiency of the at least one filter medium may include controlling an NO₂ concentration, measured from the downstream side of the filter medium, to a range of from 0.0001% to 0.01% of the concentration of the flue gas stream. In some embodiments, maintaining a constant NOₓ removal efficiency of the at least one filter medium may include controlling an NO₂ concentration, measured from the downstream side of the filter medium, to a range of from 0.0001% to 0.001% of the concentration of the flue gas stream.

In some embodiments, maintaining a constant NOₓ removal efficiency of the at least one filter medium may include controlling an NO₂ concentration, measured from the downstream side of the filter medium, to a range of from 0.001% to 0.1% of the concentration of the flue gas stream. In some embodiments, maintaining a constant NOₓ removal efficiency of the at least one filter medium may include controlling an NO₂ concentration, measured from the downstream side of the filter medium, to a range of from 0.01% to 0.1% of the concentration of the flue gas stream.

In some embodiments NOₓ efficiency is maintained in an amount of at least 70% of an initial NOₓ efficiency. In some embodiments NOₓ efficiency is maintained in an amount of at least 75% of an initial NOₓ efficiency. In some embodiments NOₓ efficiency is maintained in an amount of at least 80% of an initial NOₓ efficiency. In some embodiments NOₓ efficiency is maintained in an amount of at least 85% of an initial NOₓ efficiency. In some embodiments NOₓ efficiency is maintained in an amount of at least 90% of an initial NOₓ efficiency. In some embodiments NOₓ efficiency is maintained in an amount of at least 95% of an initial NOₓ efficiency. In some embodiments NOₓ efficiency is maintained in an amount of at least 99% of an initial NOₓ efficiency.

In some embodiments, the NOₓ removal efficiency of the at least one filter medium is maintained in a range of 70% to 99% of the initial NOₓ efficiency. In some embodiments, the NOₓ removal efficiency of the at least one filter medium is maintained in a range of 75% to 99% of the initial NOₓ efficiency. In some embodiments, the NOₓ removal efficiency of the at least one filter medium is maintained in a range of 80% to 99% of the initial NOₓ efficiency. In some embodiments, the NOₓ removal efficiency of the at least one filter medium is maintained in a range of 85% to 99% of the initial NOₓ efficiency. In some embodiments, the NOₓ removal efficiency of the at least one filter medium is maintained in a range of 90% to 99% of the initial NOₓ efficiency. In some embodiments, the NOₓ removal efficiency of the at least one filter medium is maintained in a range of 95% to 99% of the initial NOₓ efficiency.

In some embodiments, the NOₓ removal efficiency of the at least one filter medium is maintained in a range of 70% to 95% of the initial NOₓ efficiency. In some embodiments, the NOₓ removal efficiency of the at least one filter medium is maintained in a range of 70% to 90% of the initial NOₓ efficiency. In some embodiments, the NOₓ removal efficiency of the at least one filter medium is maintained in a range of 70% to 85% of the initial NOₓ efficiency. In some embodiments, the NOₓ removal efficiency of the at least one filter medium is maintained in a range of 70% to 80% of the initial NOₓ efficiency. In some embodiments, the NOₓ removal efficiency of the at least one filter medium is maintained in a range of 70% to 75% of the initial NOₓ efficiency.

In some embodiments, the NOₓ removal efficiency of the at least one filter medium is maintained in a range of 75% to 95% of the initial NOₓ efficiency. In some embodiments, the NOₓ removal efficiency of the at least one filter medium is maintained in a range of 80% to 90% of the initial NOₓ efficiency.

In some embodiments, NOₓ efficiency is maintained by increasing NO₂. In some embodiments, NO₂ is increased periodically. In some embodiments, NO₂ is increased continuously. In some embodiments, the periodic addition of NO₂ occurs at constant time intervals. In some embodiments, the periodic addition of NO₂ occurs at variable time intervals. In some embodiments, the periodic addition of NO₂ occurs at random time intervals.

In some embodiments, the periodic addition of NO₂ comprises increasing NO₂ every 1 to 40,000 hours. In some embodiments, the periodic addition of NO₂ comprises increasing NO₂ every 10 to 40,000 hours. In some embodiments, the periodic addition of NO₂ comprises increasing NO₂ every 100 to 40,000 hours. In some embodiments, the periodic addition of NO₂ comprises increasing NO₂ every 1,000 to 40,000 hours. In some embodiments, the periodic addition of NO₂ comprises increasing NO₂ every 5,000 to 40,000 hours. In some embodiments, the periodic addition of NO₂ comprises increasing NO₂ every 10,000 to 40,000 hours. In some embodiments, the periodic addition of NO₂ comprises increasing NO₂ every 20,000 to 40,000 hours. In some embodiments, the periodic addition of NO₂ comprises increasing NO₂ every 30,000 to 40,000 hours.

In some embodiments, the periodic addition of NO₂ comprises increasing NO₂ every 1 to 30,000 hours. In some embodiments, the periodic addition of NO₂ comprises increasing NO₂ every 1 to 20,000 hours. In some embodiments, the periodic addition of NO₂ comprises increasing NO₂ every 1 to 10,000 hours. In some embodiments, the periodic addition of NO₂ comprises increasing NO₂ every 1 to 5,000 hours. In some embodiments, the periodic addition of NO₂ comprises increasing NO₂ every 1 to 1,000 hours. In some embodiments, the periodic addition of NO₂ comprises increasing NO₂ every 1 to 100 hours. In some embodiments, the periodic addition of NO₂ comprises increasing NO₂ every 1 to 10 hours.

In some embodiments, the periodic addition of NO₂ comprises increasing NO₂ every 10 to 30,000 hours. In some embodiments, the periodic addition of NO₂ comprises increasing NO₂ every 100 to 20,000 hours. In some embodiments, the periodic addition of NO₂ comprises increasing NO₂ every 1,000 to 5,000 hours.

In some embodiments, the continuous addition of the NO₂ comprises providing NO₂ at a flow rate of 2% to 99% of a total flow rate of the upstream NOₓ compounds. In some embodiments, the continuous addition of the NO₂ comprises providing NO₂ at a flow rate of 5% to 99% of a total flow rate of the upstream NOₓ compounds. In some embodiments, the continuous addition of the NO₂ comprises providing NO₂ at a flow rate of 10% to 99% of a total flow rate of the upstream NOₓ compounds. In some embodiments, the continuous addition of the NO₂ comprises providing NO₂ at a flow rate of 20% to 99% of a total flow rate of the upstream NOₓ compounds. In some embodiments, the continuous addition of the NO₂ comprises providing NO₂ at a flow rate of 30% to 99% of a total flow rate of the upstream NOₓ compounds. In some embodiments, the continuous addition of the NO₂ comprises providing NO₂ at a flow rate of 40% to 99% of a total flow rate of the upstream NOₓ compounds. In some embodiments, the continuous addition of the NO₂ comprises providing NO₂ at a flow rate of 50% to 99% of a total flow rate of the upstream NOₓ compounds. In some embodiments, the continuous addition of the NO₂ comprises providing NO₂ at a flow rate of 60% to 99% of a total flow rate of the upstream NOₓ compounds. In some embodiments, the continuous addition of the NO₂ comprises providing NO₂ at a flow rate of 70% to 99% of a total flow rate of the upstream NOₓ compounds. In some embodiments, the continuous addition of the NO₂ comprises providing NO₂ at a flow rate of 80% to 99% of a total flow rate of the upstream NOₓ compounds. In some embodiments, the continuous addition of the NO₂ comprises providing NO₂ at a flow rate of 95% to 99% of a total flow rate of the upstream NOₓ compounds.

In some embodiments, the continuous addition of the NO₂ comprises providing NO₂ at a flow rate of 2% to 95% of a total flow rate of the upstream NOₓ compounds. In some embodiments, the continuous addition of the NO₂ comprises providing NO₂ at a flow rate of 2% to 90% of a total flow rate of the upstream NOₓ compounds. In some embodiments, the continuous addition of the NO₂ comprises providing NO₂ at a flow rate of 2% to 80% of a total flow rate of the upstream NOₓ compounds. In some embodiments, the continuous addition of the NO₂ comprises providing NO₂ at a flow rate of 2% to 70% of a total flow rate of the upstream NOₓ compounds. In some embodiments, the continuous addition of the NO₂ comprises providing NO₂ at a flow rate of 2% to 60% of a total flow rate of the upstream NOₓ compounds. In some embodiments, the continuous addition of the NO₂ comprises providing NO₂ at a flow rate of 2% to 50% of a total flow rate of the upstream NOₓ compounds. In some embodiments, the continuous addition of the NO₂ comprises providing NO₂ at a flow rate of 2% to 40% of a total flow rate of the upstream NOₓ compounds. In some embodiments, the continuous addition of the NO₂ comprises providing NO₂ at a flow rate of 2% to 30% of a total flow rate of the upstream NOₓ compounds. In some embodiments, the continuous addition of the NO₂ comprises providing NO₂ at a flow rate of 2% to 20% of a total flow rate of the upstream NOₓ compounds. In some embodiments, the continuous addition of the NO₂ comprises providing NO₂ at a flow rate of 2% to 10% of a total flow rate of the upstream NOₓ compounds. In some embodiments, the continuous addition of the NO₂ comprises providing NO₂ at a flow rate of 2% to 5% of a total flow rate of the upstream NOₓ compounds.

In some embodiments, the continuous addition of the NO₂ comprises providing NO₂ at a flow rate of 5% to 95% of a total flow rate of the upstream NOₓ compounds. In some embodiments, the continuous addition of the NO₂ comprises providing NO₂ at a flow rate of 10% to 90% of a total flow rate of the upstream NOₓ compounds. In some embodiments, the continuous addition of the NO₂ comprises providing NO₂ at a flow rate of 20% to 80% of a total flow rate of the upstream NOₓ compounds. In some embodiments, the continuous addition of the NO₂ comprises providing NO₂ at a flow rate of 30% to 70% of a total flow rate of the upstream NOₓ compounds. In some embodiments, the continuous addition of the NO₂ comprises providing NO₂ at a flow rate of 40% to 60% of a total flow rate of the upstream NOₓ compounds.

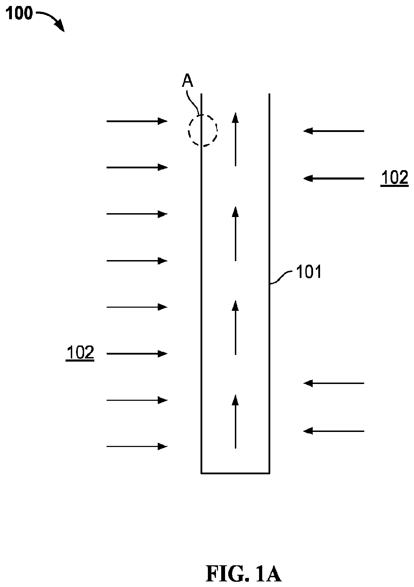

Figures 1A-1D depict embodiments of an exemplary filter medium according to the present disclosure.

Referring to Figure 1A, at least one filter medium 101 may be housed in at least one filter bag 100. A flue gas stream 102 may flow through the at least one filter medium 101 by passing through cross section A. Once the flue gas stream 102 flows through the at least one filter medium 101, the flue gas stream 102 may flow by the at least one filter bag, as indicated by the vertically oriented arrows.

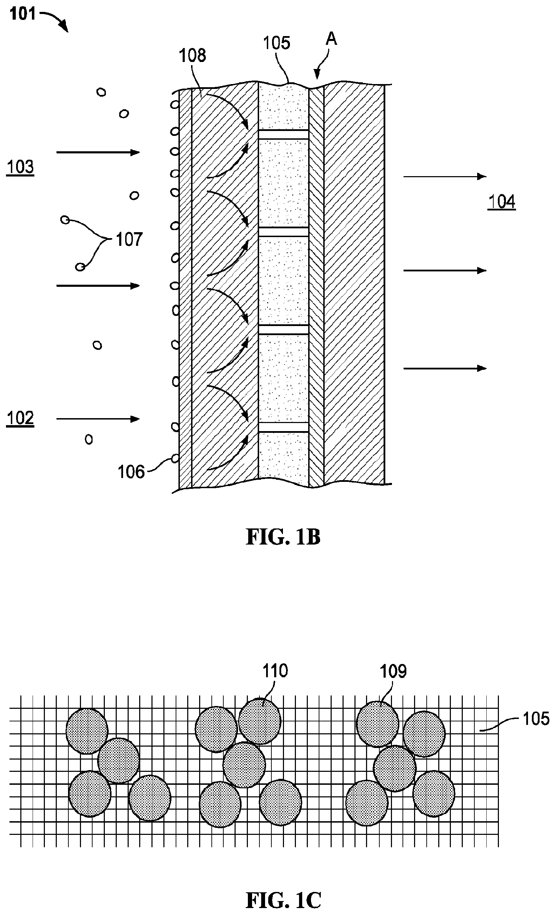

Figure 1B depicts an exemplary filter medium 101 according to some embodiments of the present disclosure. As shown in Figure 1B, a flue gas stream 102, which may comprise NOₓ compounds and solid particulates 107, may flow through cross section A from an upstream side 103 of the filter medium 101 to a downstream side 104 of the filter medium. While not shown, the upstream side 103 of the filter medium 101 may, in some embodiments, correspond to an outside of a filter bag, such as filter bag 100. Likewise, downstream side 104 of the filter medium 101 may correspond to an inside of a filter bag, such as filter bag 100. In some embodiments, filter medium 101 may include at least one protective membrane 106 and one or more felt batts 108 on at least one of: the upstream side 103 the of the filter medium 101, the downstream side 104 the of the filter medium 101, or any combination thereof. In some embodiments, the one or more felt batts 108 may be positioned on a porous catalytic film 105. In some embodiments, the combination of the one or more felt batts 108 and the porous catalytic film 105 may be referred to as a porous catalytic layer (not shown in Figure 1B).

Figure 1C depicts a non-limiting exemplary embodiment of the porous catalytic film 105. As shown, porous catalytic film 105 may include catalyst particles 109 on at least one surface of the porous catalytic film 105. ABS deposits 110 may be disposed on the surface of the catalyst particles 109.

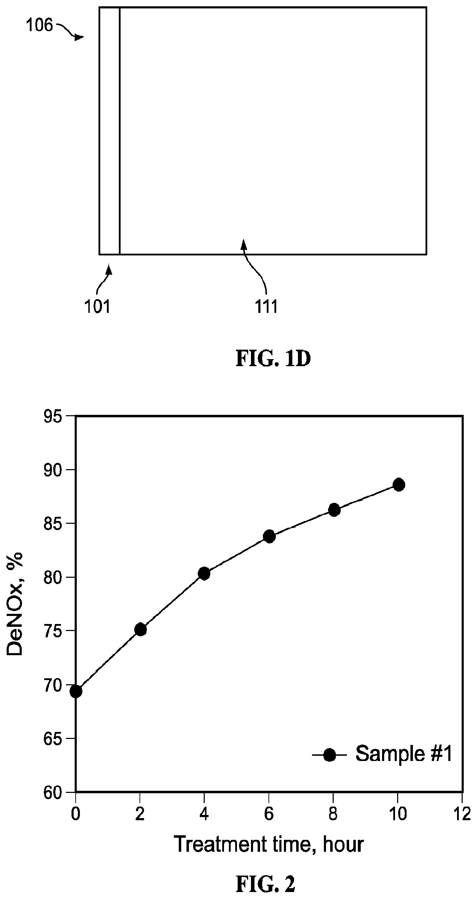

Figure 1D depicts an additional non-limiting exemplary embodiment of a filter medium 101. As shown, filter medium 101 may comprise a porous catalytic layer 111. In some non-limiting embodiments, filter medium 101 may take the form of a filter bag. In some embodiments the porous catalytic layer 111 may be coated with a catalyst material (not shown in Figure 1D) such as catalyst particles. In some embodiments, the catalyst material may be attached to the porous catalytic layer 111 by one or more adhesives described herein (not shown). In some embodiments, the filter medium 101 may include a porous protective membrane 106.

### EXAMPLES

### Example 1 (not within the scope of the claimed invention): In-situ "flow-through" regeneration of filter medium including a catalyst coated composite article by NO and NO₂ gas mixture

An exemplary filter medium including a non-limiting example of a catalyst material in the form of a catalyst coated composite article was prepared on a porous substrate having active catalyst particles adhered to the surface by a polymer adhesive according to United States Patent No. 6,331,351.

### In-situ "flow-through" regeneration by NO and NO₂ mixture

The filter medium including the catalyst coated composite sample was returned from the field after exposure to a flue gas stream. The deposition of ammonium bisulfate on the returned sample was confirmed by Fourier-transform infrared spectroscopy (FTIR, Thermal Nicolet iS50). During an in-situ regeneration, a 4.5 inch (~1.77 cm) x 4.5 inch (~1.77 cm) sample filter medium including a catalyst coated composite sample was placed in a reactor. A gas mixture including 310 ppm NO, 330 ppm NO₂, 4% O₂, 8% water moisture and N₂ was set to flow-through the catalyst coated composite sample at 230 °C with a total flowrate of 2 L/min. The gas phase NO and NO₂ concentration were monitored with a MKS MULTI-GAS^{™} 2030D FTIR analyzer (MKS Instruments, Andover, MA). The NO and NO₂ gas mixture was obtained by partially oxidizing NO to NO₂ by O₃ generated from the TG-20 O₃ generator (Ozone solutions, Hull, IA). NOₓ removal efficiency was measured before in-situ regeneration treatment and 2, 4, 6, 8, 10 hours after in-situ regeneration treatment.

### NOₓ reaction efficiency

The filter medium including the catalyst coated composite article was tested for catalytic NOₓ removal efficiency from a simulated flue gas at 230 °C. The simulated flue gas contained 200 ppm NO, 200 ppm NH₃, 5% O₂, and N₂ with a total flowrate of 3.4 L/min. To determine NOx removal efficiency, the upstream (i.e., the concentration of NOx entering into the chamber before exposure to the filter medium) and downstream concentration (i.e. the concentration of NOx exiting the chamber after exposure to the filter medium) of NO were monitored with a MKS MULTI-GAS^{™} 2030D FTIR analyzer (MKS Instruments, Andover, MA). NOx removal efficiency was calculated according to the following formula where 'NO' indicates the concentration of NO in the respective stream.${NO}_{x} removal efficiency \left("{DeNO}_{x}"\right) \left(%\right) = \left(NO in-NO out\right) / NO in \times 100 % .$

Results are shown in Figure 2. The improved NOₓ removal efficiency over time, shown in Figure 2, demonstrates that the filter medium was successfully regenerated.

### Example 2 (not within the scope of the claimed invention): in-situ "flow-through" regeneration of filter medium including a catalytic composite article by NO and NO₂ gas mixture:

A filter medium including a catalytic composite article is formed according to International Publication No. WO 2019/099025. The filter medium included a catalytic composite article having a layered assembly that included a polytetrafluoroethylene (PTFE) + catalyst composite membrane having a first, upstream side and a second, downstream side; and one or more felt batts. Each felt batt was formed of fleece formed from PTFE staple fiber. Th filter medium was connected together by a plurality of perforations formed by a needle punching process, by a needling process, or both.

The PTFE + catalyst composite membrane of the filter medium described above were prepared using the general dry blending methodology taught in United States Patent No. 7,791,861. to form composite tapes that were then uniaxially expanded according to the teachings of U.S. Patent No. 3,953,556. The resulting porous fibrillated expanded PTFE (ePTFE) composite membranes included supported catalyst particles durably enmeshed and immobilized with the ePTFE node and fibril matrix.

### In-situ "flow-through" regeneration by NO and NO₂ mixture

The sample filter medium including the sample catalytic composite article described above was in-situ fouled by 400 ppm NO, 440 ppm NH₃, 3000 ppm SO₂ and 8% water moisture at 230 °C and returned from Innovative combustion Technologies (ICT). During an in-situ regeneration, a particular filter medium including a square catalytic composite sample (4.5 inch x 4.5 inch) returned from ICT was placed in a reactor. A gas mixture including 330 ppm NO, 330 ppm NO₂, 4% O₂, 8% water moisture, and N₂ was set to flow-through the catalytic composite sample at 230 °C with a total flowrate of 2 L/min. The NO and NO₂ gas mixture was obtained by partially oxidizing NO to NO₂ by O₃ generated from the TG-20 O₃ generator (Ozone solutions, Hull, IA). NOx removal efficiency was measured before in-situ regeneration treatment and 4, 10, 15, 21, 24 hours after in-situ regeneration treatment. The downstream (i.e. the concentration of NOx exiting the chamber after exposure to the filter medium) gas phase NO and NO₂ concentrations were monitored with a MKS MULTI-GAS^{™} 2030D FTIR analyzer (MKS Instruments, Andover, MA).

### NOₓ reaction efficiency

The filter medium including the sample catalytic composite article was tested for catalytic NOx removal efficiency at 230 °C from a simulated flue gas. The simulated flue gas contained 200 ppm NO, 200 ppm NH₃, 5 vol% O₂, 5% water moisture, and N₂ with a total flowrate of 3.4 L/min. In order to determine NOₓ removal efficiency, the upstream (i.e., the concentration of NOₓ entering into the chamber before exposure to the filter medium) and downstream concentration (i.e. the concentration of NOx exiting the chamber relative after exposure to the filter medium) of NO were monitored with a MKS MULTI-GASTM 2030D FTIR analyzer (MKS Instruments, Andover, MA). NOₓ removal efficiency was calculated according to the following formula where 'NO' indicates the concentration of NO in the respective stream.${NO}_{x} removal efficiency \left("{DeNO}_{x}"\right) \left(%\right) = \left(NO in-NO out\right) / NO in \times 100 %$ 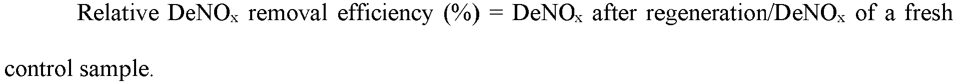 Relative DeNOx removal efficiency (%) = DeNOx after regeneration/DeNOx of a fresh control sample.

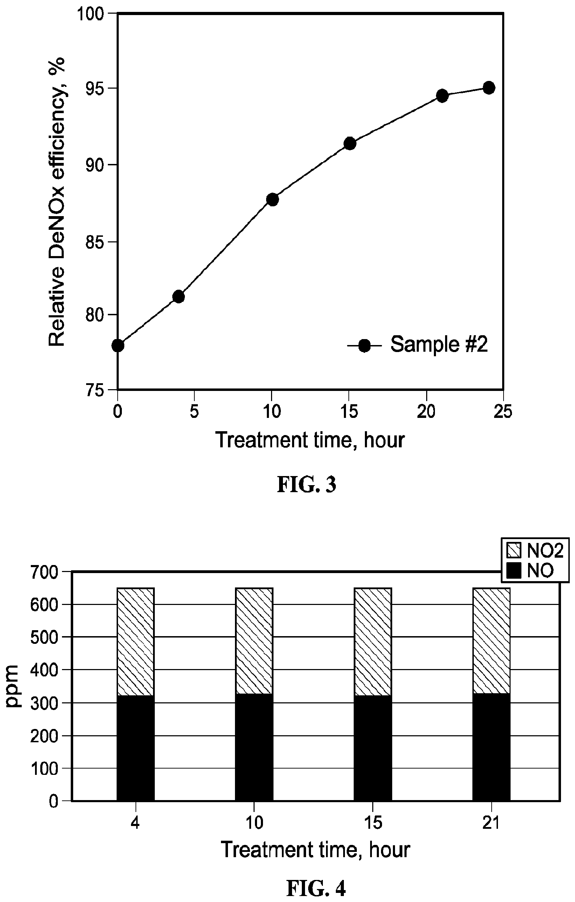

Results are shown in Figures 3 and 4. The improved NOₓ removal efficiency over time, shown in Figures 3 and 4, demonstrates that the filter medium was successfully regenerated.

### Example 3 (not within the scope of the claimed invention): in-situ "flow-through" regeneration of filter medium including a catalytic composite article by NO, NO₂ and NH₃ gas mixture

A catalytic composite article was used as described in Example 2.

### In-situ flow-through regeneration by NO, NO₂, and NH₃ mixture

Sample filter medium including the sample catalytic composite article described in Example 2 in-situ fouled by 400 ppm NO, 440 ppm NH₃, 3000 ppm SO₂ and 8% water moisture at 230 °C and returned from Innovative combustion Technologies (ICT). During an in-situ regeneration, a particular filter medium including a square catalytic composite sample (4.5 inch × 4.5 inch) returned from ICT was placed in a reactor. A gas mixture including 330 ppm NO, 330 ppm NO₂, 85 ppm NH₃, 4% O₂, 8% water moisture, and N₂ was set to flow-through the catalytic composite sample at 230 °C with a total flowrate of 2 L/min. The NO + NO₂ gas mixture was obtained by partially oxidizing NO to NO₂ by O₃ generated from the TG-20 O₃ generator (Ozone solutions, Hull, IA). NOₓ removal efficiency was measured before in-situ regeneration treatment and 4, 10, 15, 21 hours after in-situ regeneration treatment. The downstream (i.e. the concentration of NOₓ exiting the chamber after exposure to the filter medium) gas phase NO and NO₂ concentrations were monitored with a MKS MULTI-GAS^{™} 2030D FTIR analyzer (MKS Instruments, Andover, MA).

### NOₓ reaction efficiency

The filter medium including the sample catalytic composite article was tested for catalytic NOₓ removal efficiency at 230 °C from a simulated flue gas as described in Example 2.${NO}_{x} removal efficiency \left("{DeNO}_{x}"\right) \left(%\right) = \left(NO in-NO out\right) / NO in \times 100 %$ 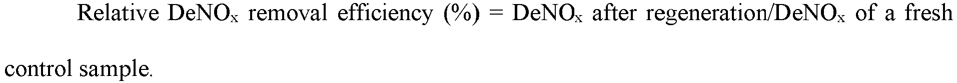 Relative DeNOx removal efficiency (%) = DeNOx after regeneration/DeNOx of a fresh control sample.

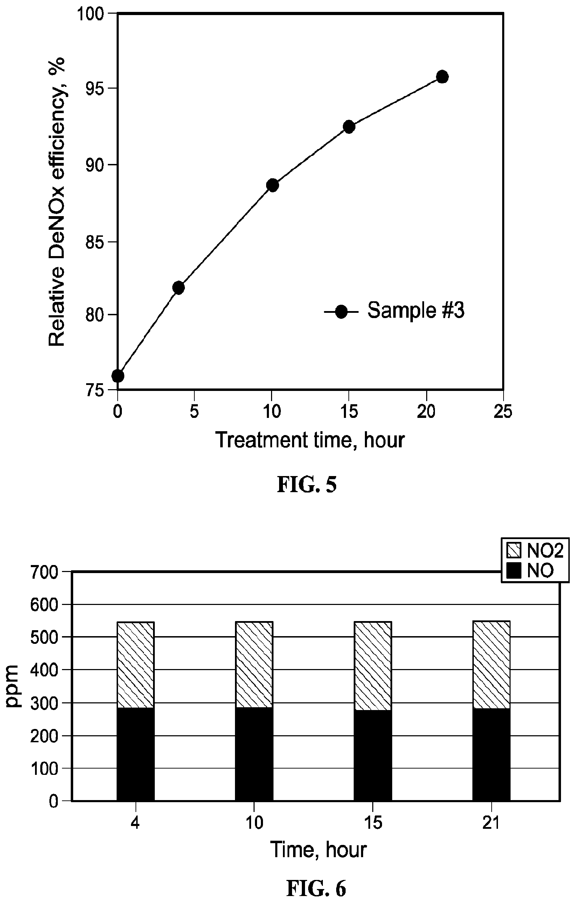

Results are shown in Figures 5 and 6. The improved NOₓ removal efficiency over time, shown in Figures 5 and 6, demonstrates that the filter medium was successfully regenerated.

### Example 4 (not within the scope of the claimed invention): In-situ "flow-by" regeneration of filter medium including a catalytic composite article by NO, NO₂ and NH₃ gas mixture:

A catalytic composite article as described in Example 2 was used.

### In-situ "flow-by" regeneration by NO, NO₂, and NH₃ mixture

A sample filter medium including the sample catalytic composite article described in Example 2 in-situ fouled by 400 ppm NO, 440 ppm NH₃, 3000 ppm SO₂ and 8% water moisture at 230 °C and returned from Innovative combustion Technologies (ICT). During an in-situ regeneration, a particular filter medium including a square catalytic composite sample (4.5 inch × 4.5 inch) returned from ICT was wrapped around a hollow elliptic cylinder stainless steel mesh and placed in a reactor. A gas mixture including 330 ppm NO, 330 ppm NO₂, 85 ppm NH₃, 4% O₂, 8% water moisture, and N₂ was set to flow-by the catalytic composite sample at 230 °C with a total flowrate of 2 L/min. The NO + NO₂ gas mixture was obtained by partially oxidizing NO to NO₂ by O₃ generated from the TG-20 O₃ generator (Ozone solutions, Hull, IA). NOx removal efficiency was measured before in-situ regeneration treatment and 4 hours after in-situ regeneration treatment.

### NOx reaction efficiency

The filter medium including the sample catalytic composite article was tested for catalytic NOₓ removal efficiency at 230 °C from a simulated flue gas as described in Example 2.${NO}_{x} removal efficiency \left("{DeNO}_{x}"\right) \left(%\right) = \left(NO in-NO out\right) / NO in \times 100 %$ 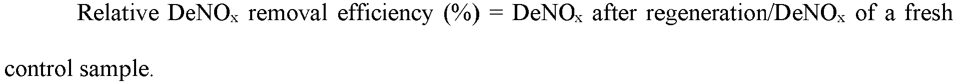 Relative DeNOx removal efficiency (%) = DeNOx after regeneration/DeNOx of a fresh control sample.

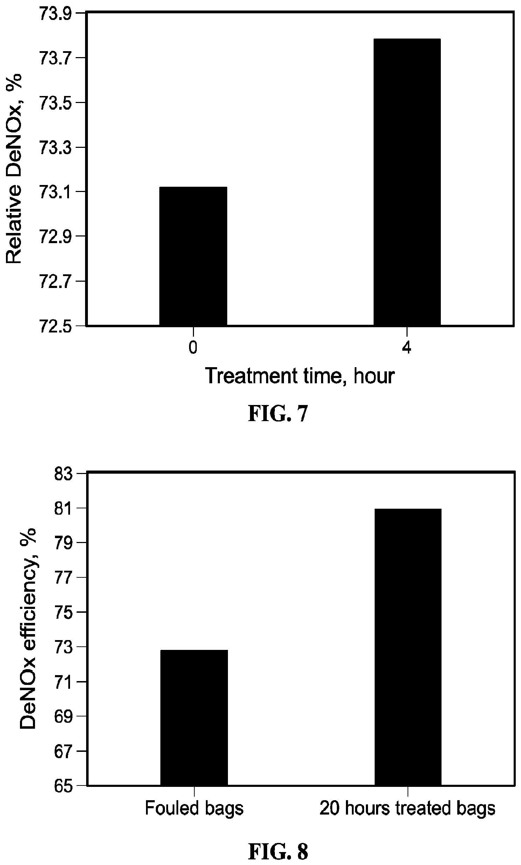

Results are shown in Figure 7. The improved NOₓ removal efficiency over time, shown in Figure 7, demonstrates that the filter medium was successfully regenerated.

### Example 5 (not within the scope of the claimed invention): In-situ "flow-through" regeneration of filter medium including catalytic filter bags by NO, NO₂ and NH₃ gas mixture

Four catalytic filter bags (65 mm in diameter, 1630 mm in length) were prepared from the catalytic composite articles described in Example 2.

### In-situ deposition of ammonium bisulfate

The filter medium including the sample catalytic filter bags were in-situ fouled at Innovative combustion Technologies by 200 ppm NO, 240 ppm NH₃, 3000 ppm SO₂ and 8% water moisture at 230 °C for 4 hours.

### In-situ "flow-through" regeneration by NO, NO₂, and NH₃ mixture

During an in-situ regeneration, a particular filter medium including 4 catalytic filter bags in-situ fouled as described above were used. A gas mixture including 30 ppm NO, 30 ppm NO₂, 8 ppm NH₃, 10% O₂, 8% water moisture, and N₂ was set to flow-through the catalytic filter bags at 230 °C with a total flowrate of 25.3 SCFM for 20 hours.

### NOₓ reaction efficiency

The filter medium including the sample catalytic filter bags were tested for NOx removal efficiency at Innovative Combustion Technologies from a simulated flue gas at 230 °C. The simulated flue gas contained 200 ppm NO, 190 ppm NH₃, 10% O₂, 8% water moisture, and N₂ with a total flowrate of 25.3 standard cubic feet per minute (SCFM). In order to determine NOx removal efficiency, the upstream (i.e., the concentration of NOx entering into the chamber before exposure to the filter medium) and downstream concentration (i.e. the concentration of NOx exiting the chamber relative after exposure to the filter medium) of NO and NO₂ were monitored with a MKS MULTI-GASTM 2030D FTIR analyzer (MKS Instruments, Andover, MA). NOx removal efficiency was calculated according to the following formula where 'NOx' indicates the total concentration of NO and NO₂ in the respective stream.

NOₓ removal efficiency ("DeNOₓ efficiency") (%) = (NOₓ in - NOₓ out)/NOₓ in × 100%. Results are shown in Figure 8. The improved NOₓ removal efficiency over time, shown in Figure 8, demonstrates that the filter medium was successfully regenerated.

### Example 6 (not within the scope of the claimed invention): Long term NOx removal reaction with exposure to SO₂

A catalytic composite article as described in Example 2 was used.

### Long term flow-through DeNOx reaction by NO, NO₂, and NH₃ mixture (with and without excess NO₂ in the downstream side of the filter medium)

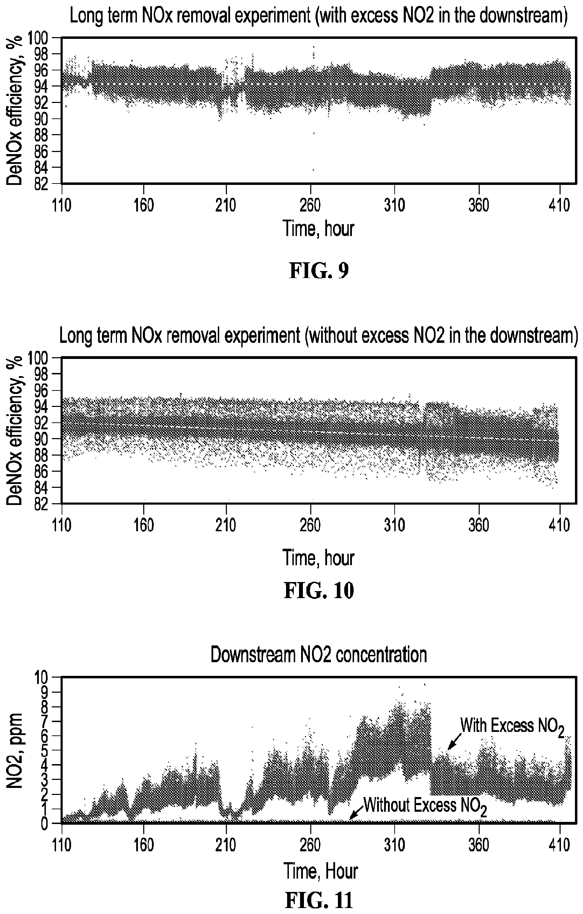

The filter medium including the sample catalytic composite article was tested for catalytic NOₓ removal efficiency from a simulated flue gas at 230 °C. The simulated flue gas included 13.5 ppm SO₂, 200 ppm NOₓ (NO + NO₂), 200 ppm NH₃, 5% O₂, 5% water moisture, and N₂ with a total flowrate of 3.4 L/min. The NO₂ was introduced from a gas cylinder. The inlet NO₂ concentration was controlled to have excess NO₂ (1-8 pm) and no excess NO₂ in the downstream (i.e. the concentration of NOx exiting the chamber after exposure to the filter medium). In order to determine NOx removal efficiency, the upstream (i.e., the concentration of NOₓ entering into the chamber before exposure to the filter medium) and downstream concentration of NO and NO₂ were monitored with a MKS MULTI-GAS^{™} 2030D FTIR analyzer (MKS Instruments, Andover, MA). NOₓ removal efficiency was calculated according to the following formula where 'NOx' indicates the total concentration of NO and NO₂ in the respective stream.${NO}_{x} removal efficiency \left("{DeNO}_{x} efficiency"\right) \left(%\right) = \left({NO}_{x} in-{NO}_{x} out\right) / {NO}_{x} in \times 100 % .$ Results are shown in Figures 9-11.

### Example 7 (not within the scope of the claimed invention): In-situ "flow-through" regeneration of filter medium including a catalytic composite article by NO, NO₂ and NH₃ gas mixture with exposure to SO₂

A catalytic composite article was used as described in Example 2.

### In-situ flow-through regeneration by NO, NO₂, and NH₃ mixture with exposure to SO₂ (with controlled NO₂ slip in the downstream side of the filter medium)

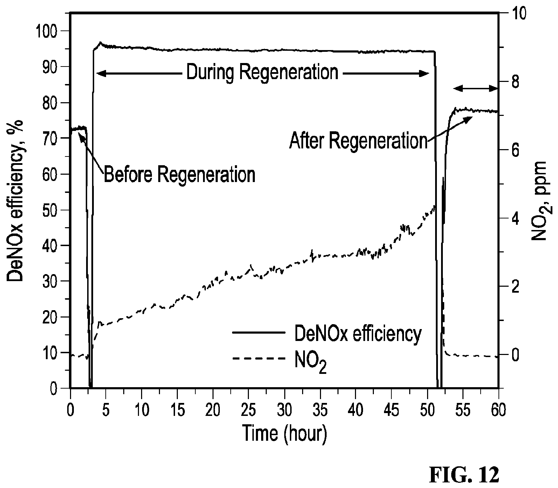

Sample filter medium including the sample catalytic composite article described in Example 2 was in-situ fouled by 400 ppm NO, 440 ppm NH₃, 3000 ppm SO₂ and 8% water moisture at 230 °C and returned from Innovative combustion Technologies (ICT). During an in-situ regeneration, a particular filter medium including a square catalytic composite sample (4.5 inch × 4.5 inch) returned from ICT was placed in a reactor. Catalytic NOₓ removal efficiency before regeneration (in the period of 0-2 hours), during regeneration (in the period of 3-51 hours) and after regeneration (in the period of 55-60 hours) were shown in Figure 12. Catalytic NOₓ removal efficiency before and after regeneration were tested at 230 °C with 200 ppm NO, 200 ppm NH₃, 5% O₂, 5% water moisture, and N₂ with a total flowrate of 3.4 L/min. During the regeneration, the simulated flue gas included 13.5 ppm SO₂, 200 ppm NOx (NO + NO₂), 200 ppm NH₃, 5% O₂, 5% water moisture, and N₂ with a total flowrate of 3.4 L/min. The inlet NO₂ concentration was controlled to have excess NO₂ (1-5 ppm, Figure 12) slip in the downstream (i.e. the concentration of NOx exiting the chamber after exposure to the filter medium). The NO₂ was introduced from a gas cylinder.

In order to determine NOx removal efficiency, the upstream (i.e., the concentration of NOₓ entering into the chamber before exposure to the filter medium) and downstream concentration of NO and NO₂ were monitored with a MKS MULTI-GAS^{™} 2030D FTIR analyzer (MKS Instruments, Andover, MA). NOₓ removal efficiency was calculated according to the following formula where 'NOx' indicates the total concentration of NO and NO₂ in the respective stream.${NO}_{x} removal efficiency \left("{DeNO}_{x} efficiency"\right) \left(%\right) = \left({NO}_{x} in-{NO}_{x} out\right) / {NO}_{x} in \times 100 % .$ Results are shown in Figure 12.

### Example 8 (not within the scope of the claimed invention): In-situ "flow-through" regeneration of filter medium including a catalytic composite article by NO, NO₂ and NH₃ gas mixture with exposure to SO₂

A catalytic composite article was used as described in Example 2.

### In-situ flow-through regeneration by NO, NO₂, and NH₃ mixture with exposure to SO₂ (with controlled NO₂ slip in the downstream side of the filter medium)

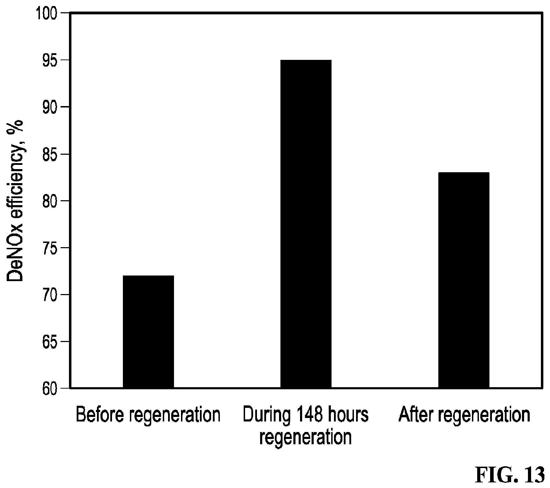

Sample filter medium including the sample catalytic composite article described in Example 2 was in-situ fouled by 400 ppm NO, 440 ppm NH₃, 3000 ppm SO₂ and 8% water moisture at 230 °C and returned from Innovative combustion Technologies (ICT). During an in-situ regeneration, a particular filter medium including a square catalytic composite sample (4.5 inch × 4.5 inch) returned from ICT was placed in a reactor. Before the in-situ regeneration, catalytic NOₓ removal efficiency (Figure 13) was tested at 230 °C with 200 ppm NO, 200 ppm NH₃, 5% O₂, 5% water moisture, and N₂ with a total flowrate of 3.4 L/min. After checking the NOₓ removal efficiency before regeneration, a 6.2days (148 hours) in-situ flow-through regeneration was conducted. During the regeneration, the simulated flue gas included 13.5 ppm SO₂, 200 ppm NOx (NO + NO₂), 200 ppm NH₃, 5% O₂, 5% water moisture, and N₂ with a total flowrate of 3.4 L/min. The inlet NO₂ concentration was controlled to have excess NO₂ (1-12 ppm) slip in the downstream (i.e. the concentration of NOx exiting the chamber after exposure to the filter medium). The NO₂ was introduced from a gas cylinder. Catalytic NOₓ removal efficiency during the in-situ regeneration was shown in Figure 13. After the in-situ regeneration, catalytic NOₓ removal efficiency was tested at 230 °C with 200 ppm NO, 200 ppm NH₃, 5% O₂, 5% water moisture, and N₂ with a total flowrate of 3.4 L/min, shown in Figure 13.

To determine NOx removal efficiency, the upstream (i.e., the concentration of NOₓ entering into the chamber before exposure to the filter medium) and downstream concentration of NO and NO₂ were monitored with a MKS MULTI-GAS^{™} 2030D FTIR analyzer (MKS Instruments, Andover, MA). NOₓ removal efficiency was calculated according to the following formula where 'NOx' indicates the total concentration of NO and NO₂ in the respective stream.${NO}_{x} removal efficiency \left("{DeNO}_{x} efficiency"\right) \left(%\right) = \left({NO}_{x} in-{NO}_{x} out\right) / {NO}_{x} in \times 100 % .$ Results are shown in Figure 13.

### Example 9 (not within the scope of the claimed invention): Long term NOx removal reaction with exposure to SO₂ with periodic in-situ "flow-through" regeneration of filter medium

A catalytic composite article was used as described in Example 2.

### Periodic in-situ flow-through regeneration by NO, NO₂, and NH₃ mixture with exposure to SO₂ (with controlled NO₂ slip in the downstream side of the filter medium)

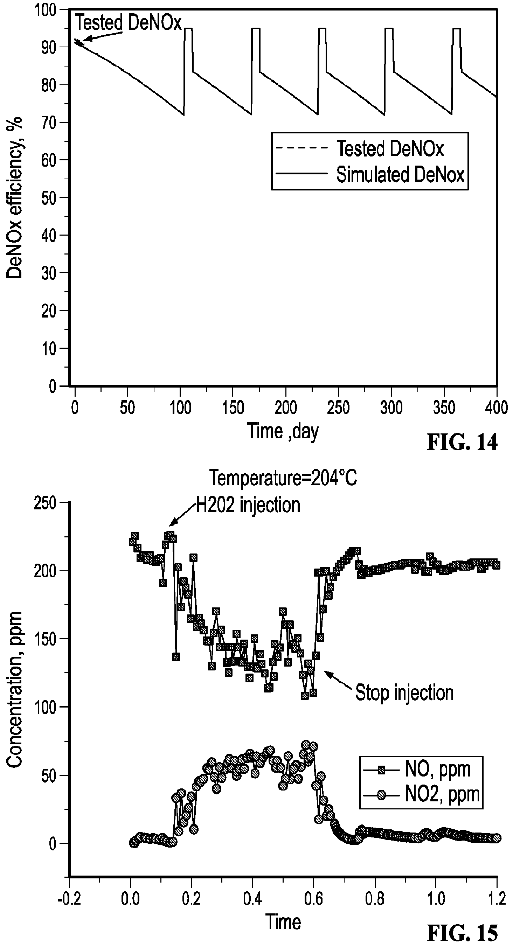

The filter medium including the sample catalytic composite article described in Example 2 was tested for catalytic NOₓ removal efficiency from a simulated flue gas at 230 °C for over 400 hours (16.7 days). The simulated flue gas included 13.5 ppm SO₂, 200 ppm NO, 200 ppm NH₃, 5% O₂, 5% water moisture, and N₂ with a total flowrate of 3.4 L/min. The DeNOx removal efficiency change with time was shown in Figure 10 and used as raw data (Tested DeNOx in Figure 14) to extrapolate the long term DeNOx removal efficiency (Simulated DeNOx in Figure 14) change with operation time. In-situ flow-through regeneration by NO, NO₂, and NH₃ mixture (with controlled NO₂ slip in the downstream side of the filter medium) will be started once the DeNOx removal efficiency decreased to 72%, or 78% of the initial DeNOx removal efficiency (initial DeNOx removal efficiency was 92%, Figure 14). According to Example 8, after 148 hours (6.2 days) in-situ flow-through regeneration by NO, NO₂, and NH₃ mixture (with controlled NO₂ slip in the downstream side of the filter medium), the DeNOx removal efficiency can be recovered to 83%, or 90% of the initial DeNOx removal efficiency (Figure 14). After the first regeneration, periodic in-situ flow-through regeneration can be conducted periodically once the DeNOx removal efficiency decreased to 72% or 78% of the initial DeNOx removal efficiency. This process is illustrated in Figure 14.

### Example 10: Injection of 1 wt% H₂O₂ solution into a simulated flue gas stream comprising SO₂ and NO

A syringe pump was used to inject 6.1 ml of 1 wt% H₂O₂ solution at a speed of 12.0 ml/hour into a simulated flue gas stream having a flow rate of 3.19 L/min. The simulated flue gas stream comprised 35 ppm SO₂ and 200 ppm NO. The concentration of NO and NO₂ before, during and after the H₂O₂ injection was measured at several different temperatures, namely 174 °C, 189 °C, 195 °C, and 204 °C, by a MKS MULTI-GAS^{™} 2030D FTIR analyzer (MKS Instruments, Andover, MA).

NO to NO₂ conversion efficiency was calculated based on the NO and NO₂ concentration during the H₂O₂ injection, NO to NO₂ conversion efficiency ("NO to NO₂ conversion") (%) = NO₂/(NO+ NO₂) ×100%.

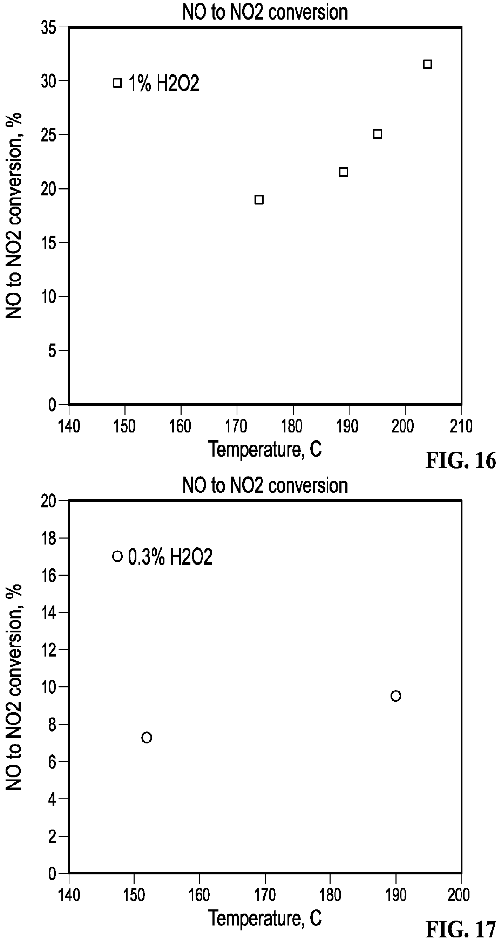

Results are shown in Figures 15 and 16. As shown in Figures 15 and 16, NOₓ removal efficiency can be improved by introducing at least one oxidizing agent, such as but not limited to H₂O₂, into a flue gas stream.

### Example 11: Injection of 0.3 wt% H₂O₂ solution into a simulated flue gas stream comprising SO₂ and NO

A syringe pump was used to inject 6.1 ml of 0.3 wt% H₂O₂ solution at a speed of 12.0 ml/hour into a simulated flue gas stream. The simulated flue gas stream had a flow rate of 3.19 L/min and comprised 35 ppm SO₂ and 200 ppm NO. The concentration of NO and NO₂ before, during and after the H₂O₂ injection was measured at two different temperatures, namely 152 °C and 190 °C, by a MKS MULTI-GAS^{™} 2030D FTIR analyzer (MKS Instruments, Andover, MA).

NO to NO₂ conversion efficiency was calculated based on the NO and NO₂ concentration during the H₂O₂ injection, NO to NO₂ conversion efficiency ("NO to NO₂ conversion") (%) = NO₂/(NO+ NO₂) ×100%.

Results are shown in Figure 17. As shown in Figure 17, NOₓ removal efficiency can be improved by introducing at least one oxidizing agent, such as but not limited to H₂O₂, into a flue gas stream.

Variations, modifications and alterations to embodiments of the present disclosure described above will make themselves apparent to those skilled in the art. All such variations, modifications, alterations and the like are intended to fall within the scope of the present disclosure, limited solely by the appended claims.

While several embodiments of the present disclosure have been described, it is understood that these embodiments are illustrative only, and not restrictive, and that many modifications may become apparent to those of ordinary skill in the art. For example, all dimensions discussed herein are provided as examples only, and are intended to be illustrative and not restrictive.

Any feature or element that is positively identified in this description may also be specifically excluded as a feature or element of an embodiment of the present as defined in the claims.

The disclosure described herein may be practiced in the absence of any element or elements, limitation or limitations, which is not specifically disclosed herein. Thus, for example, in each instance herein, any of the terms "comprising," "consisting essentially of and "consisting of" may be replaced with either of the other two terms. The terms and expressions which have been employed are used as terms of description and not of limitation, and there is no intention in the use of such terms and expressions of excluding any equivalents of the features shown and described or portions thereof, but it is recognized that various modifications are possible within.

## Claims

1. A method comprising:
providing at least one filter medium;
wherein the at least one filter medium comprises:
at least one catalyst material; and
ammonium bisulfate (ABS) deposits, ammonium sulfate (AS) deposits, or any combination thereof, the at least one filter medium being disposed within at least one filter bag;
wherein the at least one filter bag is housed within at least one filter bag housing, and wherein the at least one catalyst material is in the form of catalyst particles, wherein the at least one filter medium comprises: a porous protective layer; and a porous catalytic layer, wherein the porous catalytic layer comprises catalytic particles;
wherein the porous catalytic layer is in the form of a layered assembly comprising: a porous catalytic film; and at least one felt batt, wherein that at least one felt batt is positioned on at least one side of the porous catalytic film;
flowing a flue gas stream transverse to a cross-section of the at least one filter medium, such that the flue gas stream passes through the cross section of the at least one filter medium,
wherein the flue gas stream comprises:
NOₓ compounds comprising:
Nitric Oxide (NO), and
Nitrogen Dioxide (NO₂); and
increasing NOₓ removal efficiency of the at least one filter medium;
wherein the increasing of the NOₓ removal efficiency of the at least one filter medium comprises increasing an upstream NO₂ concentration to a range from 2% to 99% of a total concentration of the upstream NOₓ compounds, wherein increasing the upstream NO₂ concentration to a range from 2% to 99% of a total concentration of the upstream NOₓ compounds comprises introducing at least one oxidizing agent into the flue gas stream;
wherein the method regenerates the at least one filter medium.

2. The method of claim 1, wherein a temperature of the flue gas stream ranges from 160 °C to 280 °C during the flowing step.

3. The method of claim 1 or claim 2, wherein the flue gas stream further comprises Oxygen (O₂), Water (H₂O), Nitrogen (N₂), Carbon Monoxide (CO), Sulfur Dioxide (SO₂), Sulfur Trioxide (SO₃), one or more hydrocarbons, or any combination thereof.

4. The method of any of claims 1 to 3, wherein flowing the flue gas stream transverse to the cross-section of the at least one filter medium comprises flowing the flue gas stream perpendicular to the cross-section of the at least one filter medium.

5. The method of any of claims 1 to 4, wherein the porous protective layer of the at least one filter medium comprises a microporous layer, wherein the microporous layer comprises an expanded polytetrafluoroethylene (ePTFE) membrane.

6. The method of claim 5, wherein the catalyst particles are enmeshed within the porous catalytic layer.

7. The method of any of claims 1 to 6, wherein the at least one catalyst material comprises at least one of: Vanadium Monoxide (VO), Vanadium Trioxide (V₂O₃), Vanadium Dioxide (VO₂), Vanadium Pentoxide (V₂O₅), Tungsten Trioxide (WO₃), Molybdenum Trioxide (MoO₃), Titanium Dioxide (TiO₂), Silicon Dioxide (SiO₂), Aluminum Trioxide (Al₂O₃), Manganese Oxide (MnO₂), zeolites, or any combination thereof.

8. The method of any of claims 1 to 7, wherein ABS deposits are disposed on the catalyst material of the at least one filter medium in a concentration ranging from 0.01% to 99% by mass of the at least one filter medium during the step of providing the at least one filter medium.

9. The method of any of claims 1 to 8, wherein, after the increasing NOₓ removal efficiency of the at least one filter medium ABS deposits are disposed on the catalyst material of the at least one filter medium in a concentration ranging from 0.01% to 98% by mass of the at least one filter medium.

10. The method of any of claims 1 to 9, wherein the at least one oxidizing agent is chosen from: hydrogen peroxide (H₂O₂), ozone (O₃), hydroxyl radical, or any combination thereof.

11. The method of any of claims 1 to 10, wherein the increasing of the NOₓ removal efficiency further comprises removing at least some of the ABS deposits, the AS deposits, or any combination thereof, from the at least one filter medium.

12. The method of claim 10, wherein the at least one oxidizing agent is H₂O₂ and the H₂O₂ is introduced into the flue gas stream in a sufficient amount so as to oxidize at least some of the NO in the flue gas stream to NO₂, wherein the oxidation of at least some of the NO in the flue gas stream to NO₂ results in the NO₂ having the upstream concentration of 2% to 99% of the total concentration of the upstream NOₓ compounds, optionally wherein the oxidation of at least some of the NO in the flue gas stream to NO₂ results in the NO₂ having an upstream concentration of 25% to 50% of the total concentration of the upstream NOₓ compounds, or wherein the sufficient amount of H₂O₂ that is introduced into the flue gas stream is an amount sufficient to oxidize at least 30% of the NO concentration in the flue gas stream to NO₂, or wherein the sufficient amount of H₂O₂ that is introduced into the flue gas stream is an amount sufficient to oxidize 30% to 50% of the NO concentration in the flue gas stream to NO₂, or wherein the sufficient amount of H₂O₂ that is introduced into the flue gas stream is 0.1 wt% H₂O₂ to 30 wt% H₂O₂ based on a total weight of the flue gas stream.

13. The method of any preceding claim, further comprising adding ammonia (NH₃) to the flue gas stream, optionally wherein the NH₃ is added at a concentration ranging from 0.0001% to 0.5% of the concentration of the flue gas stream.

## Patentansprüche

1. Verfahren, umfassend:
Bereitstellen mindestens eines Filtermediums;
wobei das mindestens eine Filtermedium Folgendes umfasst:
mindestens ein Katalysatormaterial; und
Ammoniumbisulfat(ABS)-Abscheidungen, Ammoniumsulfat(AS)-Abscheidungen oder eine beliebige Kombination davon, wobei das mindestens eine Filtermedium innerhalb mindestens eines Filterbeutels angeordnet ist;
wobei der mindestens eine Filterbeutel innerhalb mindestens eines Filterbeutelgehäuses untergebracht ist und wobei das mindestens eine Katalysatormaterial in der Form von Katalysatorpartikeln vorliegt, wobei das mindestens eine Filtermedium Folgendes umfasst: eine poröse Schutzschicht; und eine poröse katalytische Schicht, wobei die poröse katalytische Schicht katalytische Partikel umfasst;
wobei die poröse katalytische Schicht in der Form einer geschichteten Anordnung vorliegt, die Folgendes umfasst: einen porösen katalytischen Film; und mindestens eine Filzmatte, wobei die mindestens eine Filzmatte auf mindestens einer Seite des porösen katalytischen Films positioniert ist;
Strömenlassen eines Rauchgasstroms quer zu einem Querschnitt des mindestens einen Filtermediums, sodass der Rauchgasstrom durch den Querschnitt des mindestens einen Filtermediums hindurchtritt,
wobei der Rauchgasstrom Folgendes umfasst:
NOₓ-Verbindungen, die Folgendes umfassen:
Stickstoffmonoxid (NO) und
Stickstoffdioxid (NO₂); und
Erhöhen der NOₓ-Entfernungswirksamkeit des mindestens einen Filtermediums;
wobei das Erhöhen der NOₓ-Entfernungswirksamkeit des mindestens einen Filtermediums Erhöhen einer stromaufwärtigen NO₂-Konzentration auf einen Bereich von 2 % bis 99 % einer Gesamtkonzentration der stromaufwärtigen NOₓ-Verbindungen umfasst, wobei das Erhöhen der stromaufwärtigen NO₂-Konzentration auf einen Bereich von 2 % bis 99 % einer Gesamtkonzentration der stromaufwärtigen NOₓ-Verbindungen Einführen mindestens eines Oxidationsmittels in den Rauchgasstrom umfasst;
wobei das Verfahren das mindestens eine Filtermedium regeneriert.

2. Verfahren nach Anspruch 1, wobei eine Temperatur des Rauchgasstroms während des Schritt des Strömenlassens von 160 °C bis 280 °C reicht.

3. Verfahren nach Anspruch 1 oder Anspruch 2, wobei der Rauchgasstrom ferner Sauerstoff (O₂), Wasser (H₂O), Stickstoff (N₂), Kohlenmonoxid (CO), Schwefeldioxid (SO₂), Schwefeltrioxid (SO₃), einen oder mehrere Kohlenwasserstoffe oder eine beliebige Kombination davon umfasst.

4. Verfahren nach einem der Ansprüche 1 bis 3, wobei das Strömenlassen des Rauchgasstroms quer zu dem Querschnitt des mindestens einen Filtermediums Strömenlassen des Rauchgasstroms senkrecht zu dem Querschnitt des mindestens einen Filtermediums umfasst.

5. Verfahren nach einem der Ansprüche 1 bis 4, wobei die poröse Schutzschicht des mindestens einen Filtermediums eine mikroporöse Schicht umfasst, wobei die mikroporöse Schicht eine Membran aus expandiertem Polytetrafluorethylen (ePTFE) umfasst.

6. Verfahren nach Anspruch 5, wobei die Katalysatorpartikel innerhalb der porösen katalytischen Schicht eingebunden sind.

7. Verfahren nach einem der Ansprüche 1 bis 6, wobei das mindestens eine Katalysatormaterial mindestens eines von Folgenden umfasst: Vanadiummonoxid (VO), Vanadiumtrioxid (V₂O₃), Vanadiumdioxid (VO₂), Vanadiumpentoxid (V₂O₅), Wolframtrioxid (WO₃), Molybdäntrioxid (MoO₃), Titandioxid (TiO₂), Siliciumdioxid (SiO₂), Aluminiumtrioxid (Al₂O₃), Manganoxid (MnO₂), Zeolithe oder eine beliebige Kombination davon.

8. Verfahren nach einem der Ansprüche 1 bis 7, wobei ABS-Abscheidungen auf dem Katalysatormaterial des mindestens einen Filtermediums in einer Konzentration im Bereich von 0,01 bis 99 Masse-% des mindestens einen Filtermediums während des Schritts des Bereitstellens des mindestens einen Filtermediums angeordnet werden.

9. Verfahren nach einem der Ansprüche 1 bis 8, wobei nach dem Erhöhen der NOₓ-Entfernungswirksamkeit des mindestens einen Filtermediums ABS-Abscheidungen auf dem Katalysatormaterial des mindestens einen Filtermediums in einer Konzentration im Bereich von 0,01 bis 98 Masse-% des mindestens einen Filtermediums angeordnet werden.

10. Verfahren nach einem der Ansprüche 1 bis 9, wobei das mindestens eine Oxidationsmittel ausgewählt ist aus: Wasserstoffperoxid (H₂O₂), Ozon (O₃), Hydroxyl-Radikal oder einer beliebigen Kombination davon.

11. Verfahren nach einem der Ansprüche 1 bis 10, wobei das Erhöhen der NOₓ-Entfernungswirksamkeit ferner Entfernen mindestens einiger der ABS-Abscheidungen, der AS-Abscheidungen oder einer beliebigen Kombination davon von dem mindestens einen Filtermedium umfasst.

12. Verfahren nach Anspruch 10, wobei das mindestens eine Oxidationsmittel H₂O₂ ist und das H₂O₂ in einer ausreichenden Menge in den Rauchgasstrom eingeführt wird, um mindestens einen Teil des NO in dem Rauchgasstrom zu NO₂ zu oxidieren, wobei die Oxidation des mindestens eines Teils des NO in dem Rauchgasstrom zu NO₂ dazu führt, dass das NO₂ die stromaufwärtige Konzentration von 2 % bis 99 % der Gesamtkonzentration der stromaufwärtigen NOₓ-Verbindungen aufweist, wobei optional die Oxidation des mindestens einen Teils des NO im Rauchgasstrom zu NO₂ dazu führt, dass das NO₂ eine stromaufwärtige Konzentration von 25 % bis 50 % der Gesamtkonzentration der stromaufwärtigen NOₓ-Verbindungen aufweist, oder wobei die ausreichende Menge an H₂O₂, die in den Rauchgasstrom eingeführt wird, eine Menge ist, die ausreicht, um mindestens 30 % der NO-Konzentration in dem Rauchgasstrom zu NO₂ zu oxidieren, oder wobei die ausreichende Menge an H₂O₂, die in den Rauchgasstrom eingeführt wird, eine Menge ist, die ausreicht, um 30 % bis 50 % der NO-Konzentration in dem Rauchgasstrom zu NO₂ zu oxidieren, oder wobei die ausreichende Menge an H₂O₂, die in den Rauchgasstrom eingeführt wird, 0,1 Gew.-% H₂O₂ bis 30 Gew.-% H₂O₂ basierend auf einem Gesamtgewicht des Rauchgasstroms ist.

13. Verfahren nach einem vorhergehenden Anspruch, ferner umfassend Hinzufügen von Ammoniak (NH₃) zu dem Rauchgasstrom, wobei optional das NH₃ in einer Konzentration im Bereich von 0,0001 % bis 0,5 % der Konzentration des Rauchgasstroms hinzugefügt wird.

## Revendications

1. Procédé comprenant :
la fourniture d'au moins un milieu filtrant ;
dans lequel l'au moins un milieu filtrant comprend :
au moins un matériau catalytique ; et
des dépôts de bisulfate d'ammonium (ABS), des dépôts de sulfate d'ammonium (AS) ou toute combinaison de ceux-ci, l'au moins un milieu filtrant étant disposé à l'intérieur d'au moins un sac filtrant ;
dans lequel l'au moins un sac filtrant est logé à l'intérieur d'au moins un boîtier de sac filtrant, et dans lequel l'au moins un matériau catalytique se présente sous la forme de particules catalytiques, dans lequel l'au moins un milieu filtrant comprend : une couche protectrice poreuse ; et une couche catalytique poreuse, dans lequel la couche catalytique poreuse comprend des particules catalytiques ;
dans lequel la couche catalytique poreuse se présente sous la forme d'un ensemble stratifié comprenant : un film catalytique poreux ; et au moins une nappe de feutre, dans lequel l'au moins une nappe de feutre est positionnée sur au moins un côté du film catalytique poreux ;
l'écoulement d'un flux de gaz de fumée transversalement à une section transversale de l'au moins un milieu filtrant, de sorte que le flux de gaz de fumée traverse la section transversale de l'au moins un milieu filtrant,
dans lequel le flux de gaz de fumée comprend :
des composés NOₓ comprenant :
l'oxyde nitrique (NO), et
le dioxyde d'azote (NO₂) ; et
l'augmentation de l'efficacité d'élimination des NOₓ de l'au moins un milieu filtrant ;
dans lequel l'augmentation de l'efficacité d'élimination des NOₓ de l'au moins un milieu filtrant comprend l'augmentation d'une concentration amont en NO₂ jusqu'à une plage de 2 % à 99 % d'une concentration totale des composés NOₓ en amont, dans lequel l'augmentation de la concentration amont en NO₂ jusqu'à une plage de 2 % à 99 % d'une concentration totale des composés NOₓ en amont comprend l'introduction d'au moins un agent oxydant dans le flux de gaz de fumée ;
dans lequel le procédé régénère l'au moins un milieu filtrant.

2. Procédé de la revendication 1, dans lequel une température du flux de gaz de fumée est comprise entre 160 °C et 280 °C pendant l'étape d'écoulement.

3. Procédé de la revendication 1 ou la revendication 2, dans lequel le flux de gaz de fumée comprend en outre de l'oxygène (O₂), de l'eau (H₂O), de l'azote (N₂), du monoxyde de carbone (CO), du dioxyde de soufre (SO₂), du trioxyde de soufre (SO₃), un ou plusieurs hydrocarbures, ou toute combinaison de ceux-ci.

4. Procédé de l'une quelconque des revendications 1 à 3, dans lequel l'écoulement du flux de gaz de fumée transversalement à la section transversale de l'au moins un milieu filtrant comprend l'écoulement du flux de gaz de fumée perpendiculairement à la section transversale de l'au moins un milieu filtrant.

5. Procédé de l'une quelconque des revendications 1 à 4, dans lequel la couche protectrice poreuse de l'au moins un milieu filtrant comprend une couche microporeuse, dans lequel la couche microporeuse comprend une membrane en polytétrafluoroéthylène expansé (ePTFE).

6. Procédé de la revendication 5, dans lequel les particules catalytiques sont enchevêtrées à l'intérieur de la couche catalytique poreuse.

7. Procédé de l'une quelconque des revendications 1 à 6, dans lequel l'au moins un matériau catalytique comprend au moins l'un parmi : le monoxyde de vanadium (VO), le trioxyde de vanadium (V₂O₃), le dioxyde de vanadium (VO₂), le pentoxyde de vanadium (V₂O₅), le trioxyde de tungstène (WO₃), le trioxyde de molybdène (MoO₃), le dioxyde de titane (TiO₂), le dioxyde de silicium (SiO₂), le trioxyde d'aluminium (Al₂O₃), l'oxyde de manganèse (MnO₂), les zéolites ou toute combinaison de ceux-ci.

8. Procédé de l'une quelconque des revendications 1 à 7, dans lequel des dépôts d'ABS sont disposés sur le matériau catalytique de l'au moins un milieu filtrant à une concentration allant de 0,01 % à 99 % en masse de l'au moins un milieu filtrant pendant l'étape de fourniture de l'au moins un milieu filtrant.

9. Procédé de l'une quelconque des revendications 1 à 8, dans lequel, après l'augmentation de l'efficacité d'élimination des NOₓ de l'au moins un milieu filtrant, des dépôts d'ABS sont disposés sur le matériau catalytique de l'au moins un milieu filtrant à une concentration allant de 0,01 % à 98 % en masse de l'au moins un milieu filtrant.

10. Procédé de l'une quelconque des revendications 1 à 9, dans lequel l'au moins un agent oxydant est choisi parmi : le peroxyde d'hydrogène (H₂O₂), l'ozone (O₃), le radical hydroxyle, ou toute combinaison de ceux-ci.

11. Procédé de l'une quelconque des revendications 1 à 10, dans lequel l'augmentation de l'efficacité d'élimination des NOₓ comprend en outre l'élimination d'au moins une partie des dépôts d'ABS, des dépôts d'AS ou de toute combinaison de ceux-ci, de l'au moins un milieu filtrant.

12. Procédé de la revendication 10, dans lequel l'au moins un agent oxydant est H₂O₂ et le H₂O₂ est introduit dans le flux de gaz de fumée en une quantité suffisante de façon à oxyder au moins une partie du NO dans le flux de gaz de fumée en NO₂, dans lequel l'oxydation d'au moins une partie du NO dans le flux de gaz de fumée en NO₂ a pour résultat que le NO₂ présente la concentration amont de 2 % à 99 % de la concentration totale des composés NOₓ en amont, éventuellement dans lequel l'oxydation d'au moins une partie du NO dans le flux de gaz de fumée en NO₂ a pour résultat que le NO₂ présente une concentration amont de 25 % à 50 % de la concentration totale des composés NOₓ en amont, ou dans lequel la quantité suffisante de H₂O₂ introduite dans le flux de gaz de fumée est une quantité suffisante pour oxyder au moins 30 % de la concentration de NO dans le flux de gaz de fumée en NO₂, ou dans lequel la quantité suffisante de H₂O₂ introduite dans le flux de gaz de fumée est une quantité suffisante pour oxyder 30 % à 50 % de la concentration de NO dans le flux de gaz de fumée en NO₂, ou dans lequel la quantité suffisante de H₂O₂ introduite dans le flux de gaz de fumée est de 0,1 % en poids de H₂O₂ à 30 % en poids de H₂O₂ sur la base d'un poids total du flux de gaz de fumée.

13. Procédé d'une quelconque revendication précédente, comprenant en outre l'ajout d'ammoniac (NH₃) au flux de gaz de fumée, éventuellement dans lequel le NH₃ est ajouté à une concentration allant de 0,0001 % à 0,5 % de la concentration du flux de gaz de fumée.
